# EUROPÄISCHE PATENTSCHRIFT

(11) **EP 1 609 516 B1**
(45) Veröffentlichungstag und Bekanntmachung des Hinweises auf die Patenterteilung: **03.11.2010**
(21) Anmeldenummer: 05010828.1
(22) Anmeldetag: 19.05.2005
(51) Int. Cl.: B01D 11/02, C09C 1/28

(54) **Verfahren zur Extraktion von Stoffen aus silanmodifizierten Füllstoffen**
Process for extracting substances from silan-modified fillers
Procédé pour extraire des substances des charges modifiées aux silanes

(30) Priorität: 25.06.2004 DE 102004030737
(43) Veröffentlichungstag der Anmeldung: 28.12.2005
(73) Patentinhaber: Evonik Degussa GmbH, 45128 Essen (DE)
(72) Erfinder: Korth, Karsten, Dr., 79639 Grenzach-Wyhlen (DE); Heidlas, Jürgen, Dr., 83308 Trostberg (DE); Stork, Kurt, 93326 Abensberg (DE); Zobel, Rudolf, Dr., 97348 Willanzheim (DE)

(56) Entgegenhaltungen:
- EP-A- 0 323 699
- EP-A- 1 256 604
- EP-A- 1 357 156
- US-A- 4 153 063
- US-A- 5 637 209

## Beschreibung

Die Erfindung betrifft ein Verfahren zur Extraktion von Stoffen aus silanmodifizierten Füllstoffen.

Es sind zwei grundsätzliche Varianten für die Herstellung von silanmodifizierten Füllstoffen, wie sie beispielsweise in der Kunststoff- oder Gummiindustrie verwendet werden, bekannt.

Bekannt ist beispielsweise die Flüssigdosierung von organisch modifizierten Alkoxysilanen Y-R-Si(R'ₓ(OR")₃₋ₓ zu den zu modifizierenden Füllstoffen bei der Rohmischungsherstellung von füllstoffverstärkten Gummimischungen (US 3,997,356).

Bekannt ist ferner die Dosierung des verstärkend wirkenden Füllstoff/Silan-Gemisches über eine vorgebildete physikalische Mischung aus organisch modifiziertem Alkoxysilan und Füllstoff (DE 3314742, US 4,076,550) durchzuführen.
Ein Nachteil dieser nicht.nachbehandelten Abmischungen aus Alkoxysilan und Füllstoff ist die mangelnde Lagerstabilität und die damit häufig nicht gegebene Eigenschaftsstabilität der Produkte. Es werden im zeitlichen Verlauf der Lagerung kontinuierlich kleine Mengen an Alkoholen durch Hydrolyse und Kondensation der Alkoxysilane freigesetzt. Dadurch verändert sich die stoffliche Zusammensetzung und die spätere Performance der Füllstoff/Silan-Gemische.

Aus EP 1,256,604 ist ein Verfahren zur Umsetzung von mindestens einem biopolymeren, biooligomeren, oxidischen oder silikatischen Füllstoff in einem verdichteten Gas mit mindestens einem Silan bekannt. Im Verfahren ist eine hohe Durchsatzrate an verdichteten Gasen wünschenswert, weil dadurch eine Verkürzung der notwendigen Extraktionszeiten beziehungsweise eine Erhöhung der extrahierten Stoffmenge pro Zeiteinheit möglich ist.

Die zu extrahierenden Füllstoffe werden in EP 1,256,604 axial von verdichtetem Gas durchströmt oder in einem Druckbehälter gerührt. Aus den Beispielen zeigt sich, daß der erreichbare axiale Durchfluß an überkritischem CO₂ durch den zu modifizierenden Füllstoff stark von der Partikelgrößenverteilung der verwendeten Füllstoffe und der Länge des verwendeten Autoklavenbehälters abhängig ist.

Aus wirtschaftlichen Gründen sind Druckautoklaven meist als schlanke, lange Behälter ausgelegt. Dies gilt insbesondere für große Produktionsanlagen. Dies führt im vorliegenden Fall im Produktionsmaßstab zu hohen Schütthöhen für die zu modifizierenden Füllstoffe.
Nachteil der bekannten Verfahrensweise ist, daß es bei gewünschten, hohen Durchsatzraten an verdichteten Gasen, zu hohen Differenzdrücken zwischen Gaseintritt und Gasaustritt bei den Extraktionen kommt, die die Anlagenteile (besonders die Sinterplatten, die das Extraktionsgut zurückhalten) schädigen können. Es besteht zudem die Gefahr der Kanalbildung, mit der Folge einer ungleichmässigen Durchströmung des Schüttgutes und dadurch einer ungleichmäßigen Extraktion der Füllstoffe. Werden nur niedrige Durchsatzraten an verdichteten Gasen realisiert, um die Differenzdrücke gering zu halten, führt das zu langen Extraktionszeiten. Speziell bei feinteiligen, pulverförmigen Füllstoffen sind so nur unbefriedigende Durchsätze an verdichteten Gasen in der Praxis zu realisieren. Das ist einer zeit- und damit kostenoptimalen Nutzung im industriellen Maßstab hinderlich.

Aus EP 1,357,156 ist ein Verfahren zur Herstellung eines staubarmen, mikrogeperlten oder mikrogranulären, silanmodifizierten oxidischen oder silikatischen Füllstoffs in einem verdichteten Gas bekannt. Nachteil des bekannten Verfahrens ist, daß der als Bestandteil der experimentellen Apparatur beschriebene Abscheider, in dem das verdichtete Gas dekomprimiert wird, keine zufriedenstellende, technische Lösung darstellt. Der Abscheider erfüllt die gestellte Anforderung, eine möglichst effektive und vollständige Abscheidung der im verdichteten Gas enthaltenen, vom Füllstoff extrahierten Stoffe zu gewährleisten, nicht in zufriedenstellendem Maße. Es kommt nur zu einer unvollständigen Abtrennung der im verdichteten Gas enthaltenen Stoffe, zum Beispiel des aus den Alkoxysilanen freigesetzten Alkohols. Die nicht vorhandene Trennung von Extrakt und Gasstrom führt zudem zur Re-Kontamination des verdichteten Gases im Verlauf der Extraktion. Dies hat zur Folge, daß Stoffe, zum Beispiel Ethanol, durch und aus dem Abscheider transportiert werden und sich in anderen Teilen der Druckapparatur, zum Beispiel im Pufferbehälter ansammeln.

In dem im Pufferbehälter befindlichen, verdichteten oder flüssigen Gas kann sich ein Lösungsgleichgewicht der durch und aus dem Abscheider transportierten Stoffe einstellen.

In der Folge ist das dem Druckautoklaven aus dem Pufferbehälter wieder zugeführte, verdichtete Gas nicht stofffrei, zum Beispiel ethanolfrei, was ein verringertes Aufnahmevermögen (Beladungskapazität) des verdichteten Gases im Extraktionsbehälter zur Folge hat. Daraus folgt anschließend eine geringere Stoffaufnahme des verdichteten Gases im Druckautoklaven. Die verringerte Beladungskapazität des verdichteten Gases, zum Beispiel mit Ethanol, hat deshalb verlängerte Extraktionszeiten für die Entfernung des Ethanols vom silanmodifizierten Füllstoff im Druckautoklaven zur Folge. Das ist einer zeit- und damit kostenoptimalen Nutzung im industriellen Maßstab hinderlich.

Aufgabe der vorliegenden Erfindung ist es, ein Verfahren zur effektiven Extraktion von Stoffen von silanmodifizierten Füllstoffen bereitzustellen, welches hohe Durchsatzraten an verdichteten Gasen durch ein Füllstoffschüttbett, bei gleichzeitig stattfindender effektiver Extraktion des Füllstofffestbettes ermöglicht.

Eine weitere Aufgabe der vorliegenden Erfindung, ist die effektive Abtrennung von Stoffen aus einem als Transportmedium dienenden verdichteten Gas bei der Extraktion von silanmodifizierten Füllstoffen.

Gegenstand der Erfindung ist ein Verfahren nach Anspruch 1.

Ein apparativ-geschlossener Kreislauf der verdichteten Gase kann realisiert werden, wenn er mit einer Sorptionsvorrichtung, zur Entfernung der im verdichteten Gas gelösten Stoffe, ergänzt wird.

Das verdichtete, stoffbeladene verdichtete Gas kann mindestens eine Sorptionsvorrichtung durchlaufen.

Das erfindungsgemäße Verfahren kann bevorzugt unter gleichmäßigen Bedingungen durchgeführt werden, bei denen das komprimierte Gas die Schüttung radial durchströmt und bei dem die Extraktion von Stoffen von und aus dem Füllstoff mit einer anschließenden Sorption der Stoffe kombiniert ist.

Mit gleichmäßigen Bedingungen können alle Prozesse gemeint sein, bei denen die Druckschwankungen um den Zielwert nicht mehr als +/- 50 bar, vorzugsweise nicht mehr als +/- 25 bar, besonders bevorzugt nicht mehr als +/- 10 bar, ganz besonders bevorzugt nicht mehr als +/-5 bar, betragen.

Die Abtrennung der extrahierten Stoffe vom silanmodifizierten oxidischen oder silikatischen Füllstoff kann dadurch verbessert werden, daß die im verdichteten Gas befindlichen Stoffe aus dem Gasstrom durch Sorption irreversibel entfernt werden.

Die technische Ausführung kann in unterschiedlicher Form und Weise erfolgen. Die allen, in Details eventuell abweichenden, Ausführungen gemeinsamen, erfindungsrelevanten Begriffe werden kurz näher erläutert beziehungsweise definiert:

Mit axialer Durchströmung kann eine Durchströmung parallel zur symmetrischen Rotationsachse eines zylindrisch-ausgelegten Druckbehälters gemeint sein.

Mit radialer Durchströmung kann eine Durchströmung quer zur symmetrischen Rotationsachse eines zylindrisch-ausgelegten Reaktionsgefäßes gemeint sein.

Unter axialer Durchströmung kann verstanden werden, daß das verdichtete Gas eine Schichtdicke des silanmodifizierten Füllstoffs durchströmt, die grösser ist, als die Schichtdicke des Füllstoffs senkrecht zur Strömungsrichtung des verdichteten Gases.

Unter radialer Durchströmung kann verstanden werden, daß das verdichtete Gas eine Schichtdicke des silanmodifizierten Füllstoffs durchströmt, die kleiner ist, als die Schichtdicke des Füllstoffs senkrecht zur Strömungsrichtung des verdichteten Gases.

Unter Sorption kann Adsorption, Absorption oder Chemisorption verstanden werden.

Unter Sorbens können alle Stoffe oder Materialien künstlicher oder natürlicher Herkunft verstanden werden, die einen Stoff, mit dem sie in Berührung stehen, selektiv oder unselektiv aufnehmen. Die Aufnahme kann physikalische Wechselwirkungen wie auch chemische Reaktionen der Stoffe oder Materialien miteinander umfassen, beziehungsweise einschließen.

Beispielsweise kann für die Adsorption die Abscheidung von Stoffen aus dem verdichteten Gas auf oder in Materialien wie Zeolithen oder Aktivkohlen erfolgen.

Das verdichtete Gas kann beispielsweise durch eine als Adsorbens dienende Sorbensschicht in einem Druckbehälter geführt werden. Als Sorbensschicht können Zeolithe, Aktivkohlen, Kieselsäuren, Wasser, Kieselgele oder andere hochoberflächige, poröse Stoffe oder Materialien eingesetzt werden.

Beispielsweise kann die Absorption durch Auswaschung von Stoffen aus dem verdichteten Gas mit Wasser erfolgen. Die Auswaschung kann unter Druck oder drucklos erfolgen. Die Auswaschung von Stoffen aus dem verdichteten Gas kann bei Drücken zwischen 1-2000 bar, vorzugsweise 1-300 bar, besonders bevorzugt 10-150 bar, ganz besonders bevorzugt 10-120 bar, erfolgen.

Die Auswaschung von Stoffen die durch ein verdichtetes Gas von einem silanmodifizierten oxidischen oder silikatischen Füllstoff extrahiert werden, kann zweckmäßigerweise im Anschluß an den Extraktionsprozeß erfolgen.

Das verdichtete Gas kann beispielsweise im Gegenstrom zu einer als Sorbens dienenden Flüssigkeit durch einen mit Füllkörpern oder anderen Vorrichtungen modifizierten Druckbehälter geführt werden.

Bevorzugt kann das verdichtete Gas von unten und die Flüssigkeit im Gegenstrom von oben in eine Kolonne, beziehungsweise einen geeignet ausgeführten Druckbehälter, eingebracht werden.

Das gewaschene Gas kann oben wieder aus dem Druckbehälter geführt werden, während unten Sorbensflüssigkeit und extrahierte Stoffe aus dem Druckbehälter abgelassen werden.

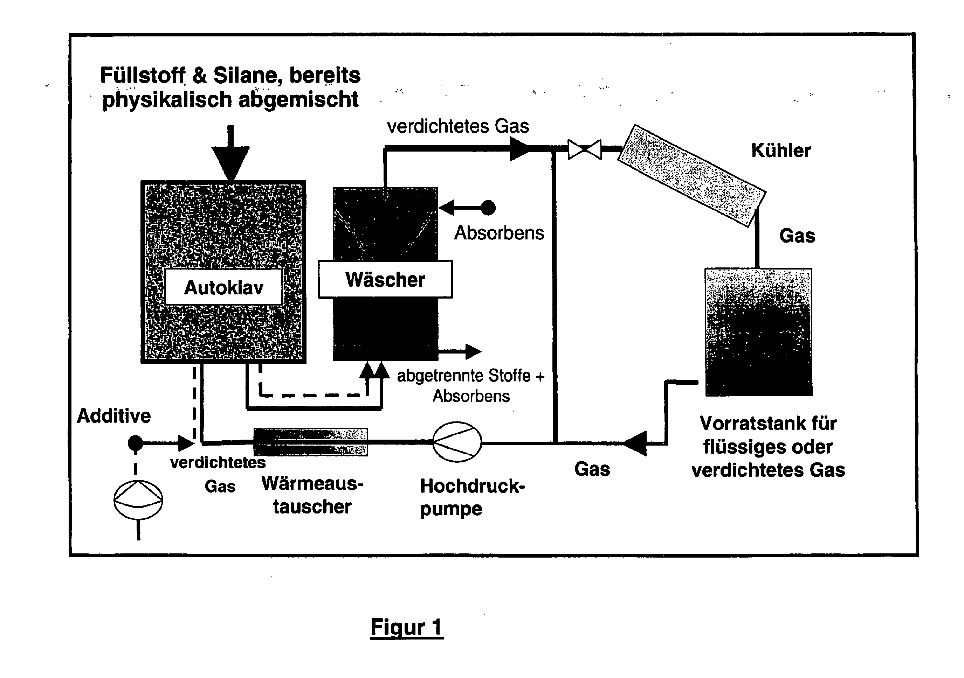

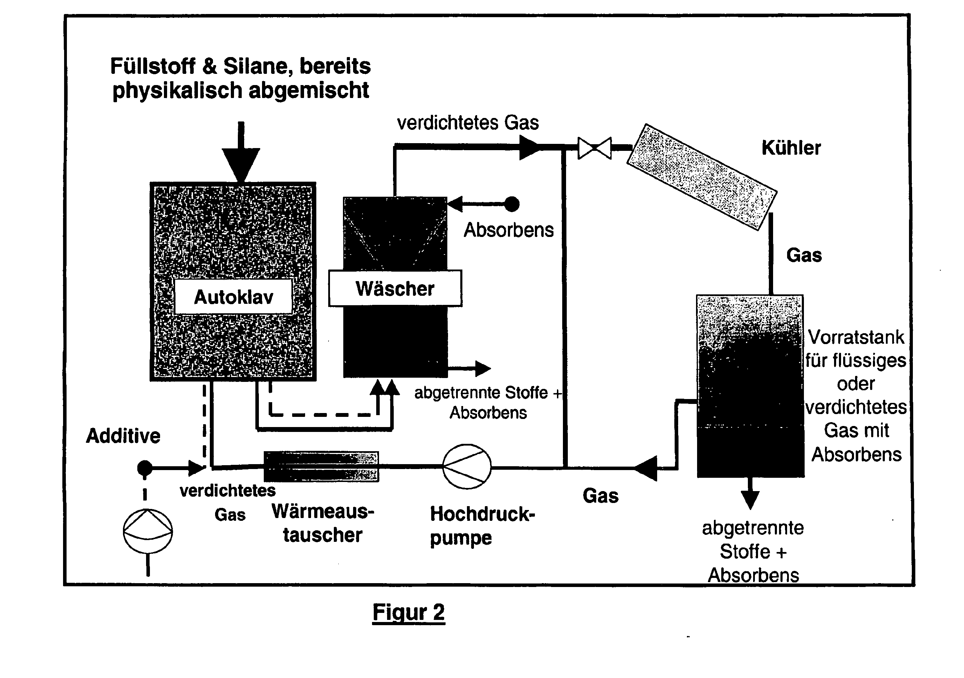

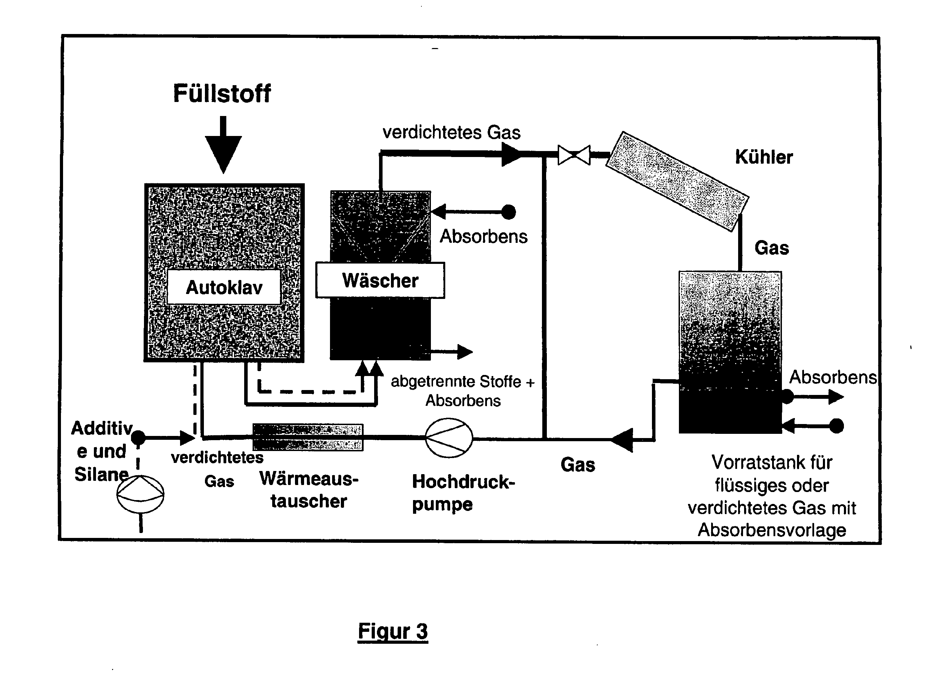

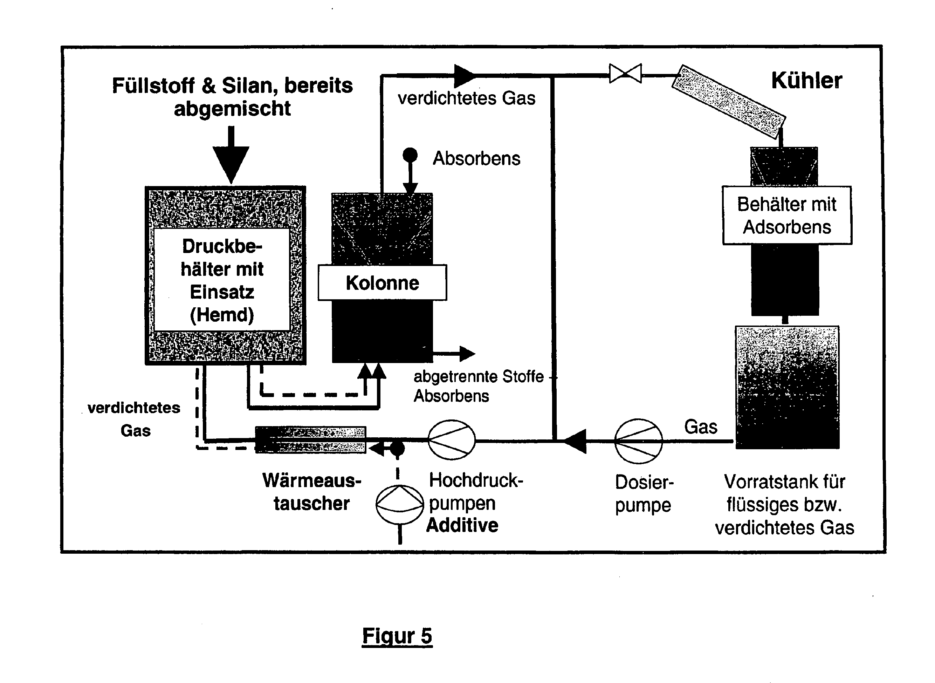

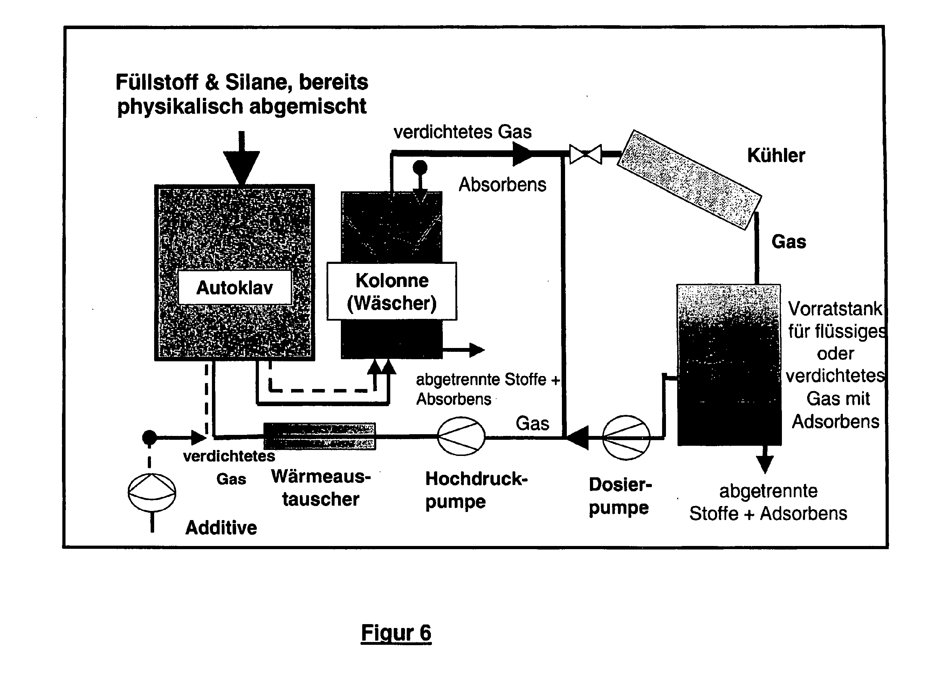

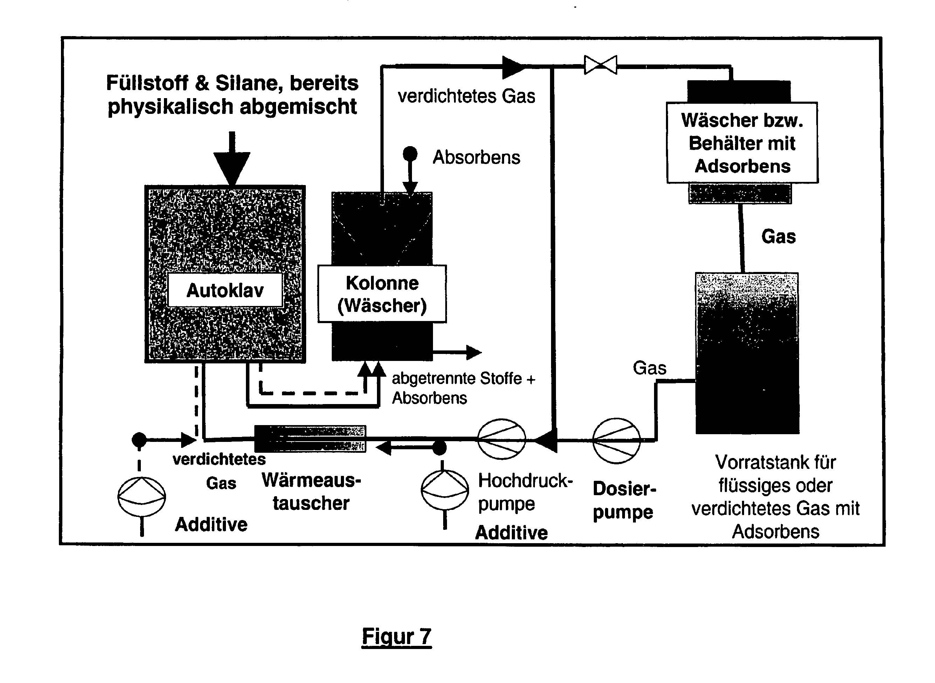

Die Flüssigkeit kann kontinuierlich oder diskontinuierlich, aus dem als Wäscher dienenden Behälter, entnommen werden (Figur 1-7).

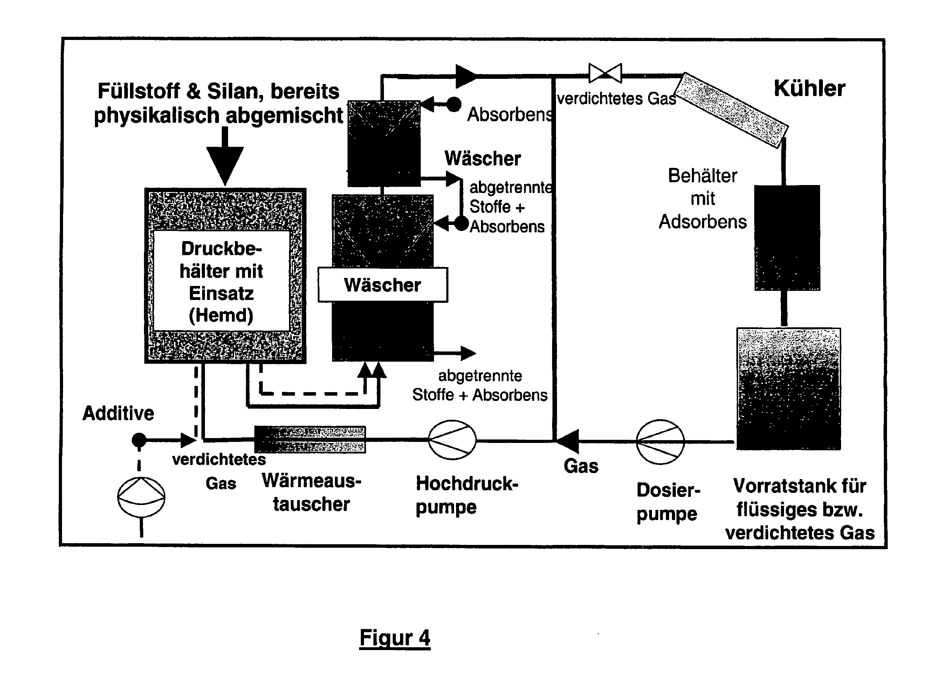

Die Waschflüssigkeit kann im Prozess mindestens einen Durchlauf durch mindestens einen als Wäscher fungierenden Druckbehälter absolvieren (Figur 4).

Die Absorption von Stoffen aus dem verdichteten Gas kann mit einer Adsorption von Stoffen aus dem verdichteten Gas kombiniert werden (Figur 4 + 5 + 7).

In den, bei der Extraktion mit verdichteten Gasen unverzichtbaren, Druckbehälter können mindestens zwei zusätzliche Vorrichtungen eingesetzt werden. Die erste Vorrichtung kann der Begrenzung des Raumes, der mit Füllstoff gefüllt ist, dienen und kann gleichzeitig gasdurchlässig sein. Die zweite Vorrichtung kann der Zuführung des verdichteten Gases dienen. Eine dritte Vorrichtung kann der Entfernung der silanmodifizierten und extrahierten Füllstoffe aus dem Druckbehälter dienen und kann sich zweckmäßigerweise am Boden des Druckbehälters und/oder am Boden der ersten Vorrichtung befinden.

Die Vorrichtung zur Durchführung des erfindungsgemäßen Verfahrens besteht aus mindestens einem Druckbehälter, mit mindestens einem gasdurchlässigen Innenbehälter, Sieb oder Einsatz zur Aufnahme der Füllstoffe und mindestens einer im Füllstoffschüttbett befindlichen Gaszu- und Gasabführung und weist eine radial ausgelegte Gaszuführung beziehungsweise Gasabführung aus dem Füllstoffschüttbett auf. Die Vorrichtung ermöglicht radial von Außen nach Innen ausgelegte Gasdurchflußrichtung ermöglichen.

Die erste Vorrichtung kann aus einem zweiten Behälter bestehen, dessen Mantel zum Beispiel aus einem Lochblech besteht. Diese erste Vorrichtung kann als "Sieb" oder "Hemd" bezeichnet werden. Das Hemd kann aus einem Lochblech oder Spaltsieb, einem fluiddurchlässigen porösen Stoff, einem fluiddurchlässigem Gewebe, einer fluiddurchlässigen Membran, einem fluiddurchlässigen Polymer oder einer geeigneten mechanischen Anordnung wie Spaltsieben, Schikanen oder ähnlichem bestehen. Die erste Vorrichtung kann im äußeren Druckbehälter geeignet eingesetzt oder befestigt sein, das heißt sie kann zum Beispiel verankert, gestützt oder aufgehängt sein.

Im Zentrum der ersten Vorrichtung (Hemd, Sieb), und damit auch im Zentrum des ursprünglichen Druckbehälters, kann coaxial die zweite Vorrichtung angeordnet sein. Diese kann zum Beispiel aus einem hohlen Rohr ("Zentralrohr") oder ähnlichem bestehen, bei dem ein Ende geschlossen, der Mantel aber durchlässig für verdichtete Gase ist. Die zweite Vorrichtung kann im äußeren Druckbehälter oder der ersten Vorrichtung geeignet eingesetzt oder befestigt sein, das heißt sie kann zum Beispiel verankert, gestützt, geschraubt, geschweißt oder aufgehängt sein.

Die dritte Vorrichtung kann sich am Boden der ersten Vorrichtung beziehungsweise am Boden des Druckautoklaven befinden. Sie kann nach dem Extraktionsprozess der Ausbringung der extrahierten, silanmodifizierten Füllstoffe dienen. Dies kann entweder mechanisch, durch Überdruck oder durch Unterdruck geschehen. Die Füllstoffe können durch Überdruck in einen druckfesten Zwischenbehälter gefördert werden (Druckförderung). Die Füllstoffe können durch Unterdruck in einen vakuumfesten Zwischenbehälter gesaugt werden (Saugförderung).

Die Füllstoffe können über Öffnungen im Druckbehälter in den Zwischenraum ("Ringraum") zwischen erster und zweiter Vorrichtung (zum Beispiel Hemd und Zentralrohr) gefüllt werden. Dabei kann eine Befüllung von oben, zum Beispiel über Öffnungen im Deckel des Druckbehälters, bevorzugt werden.

Die Gaszuführung in die zweite Vorrichtung (zum Beispiel das axiale Zentralrohr) kann entweder von oben oder von unten erfolgen.

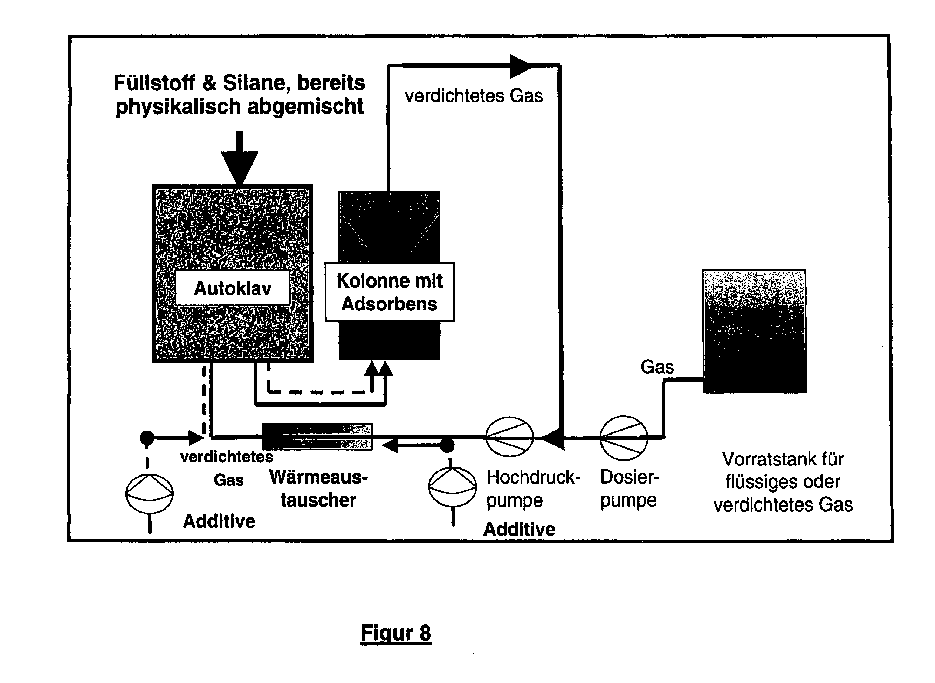

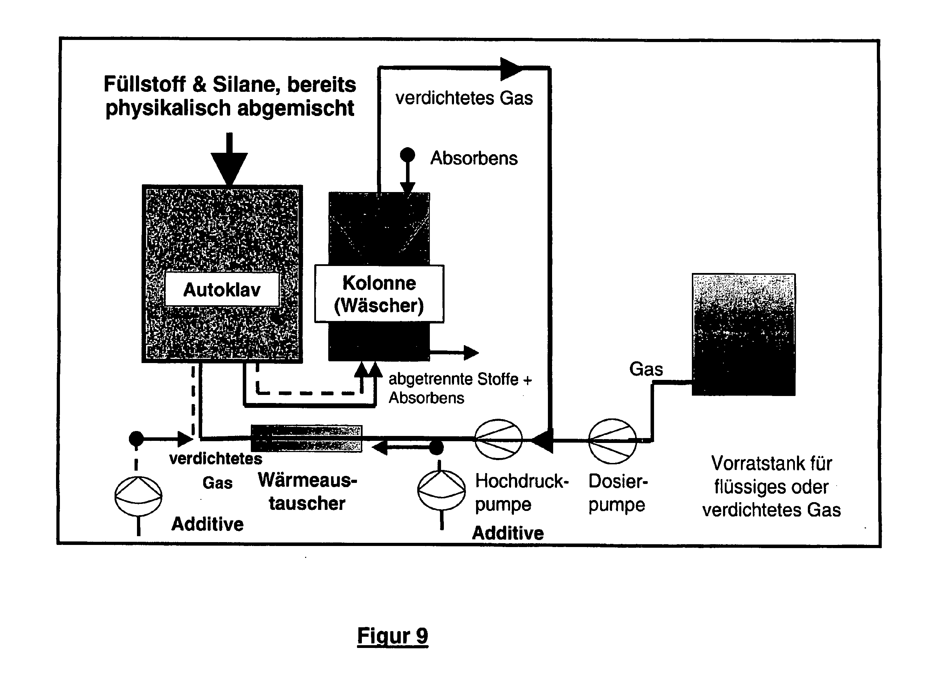

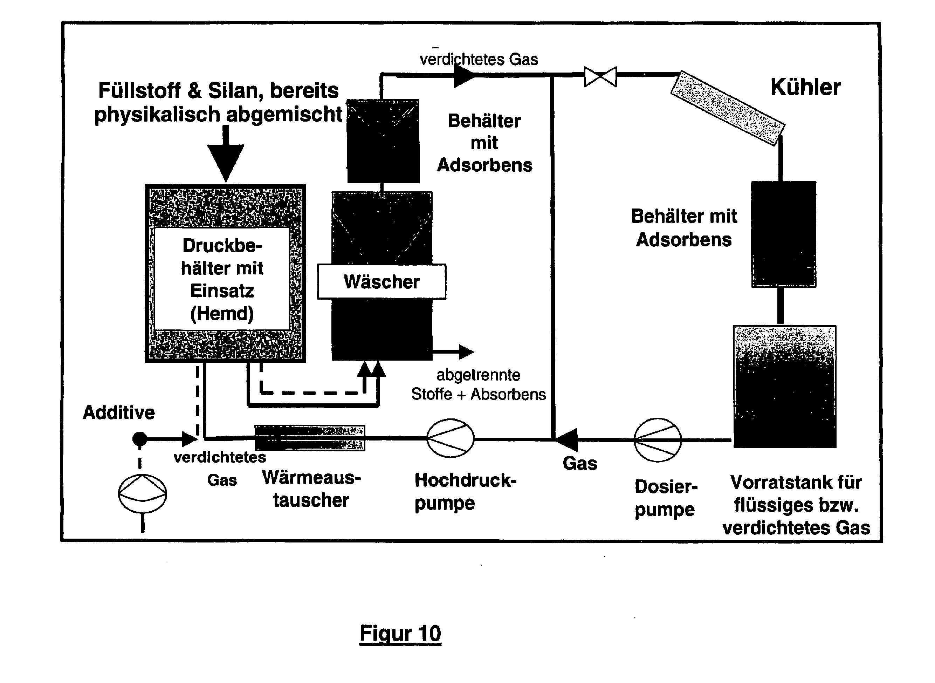

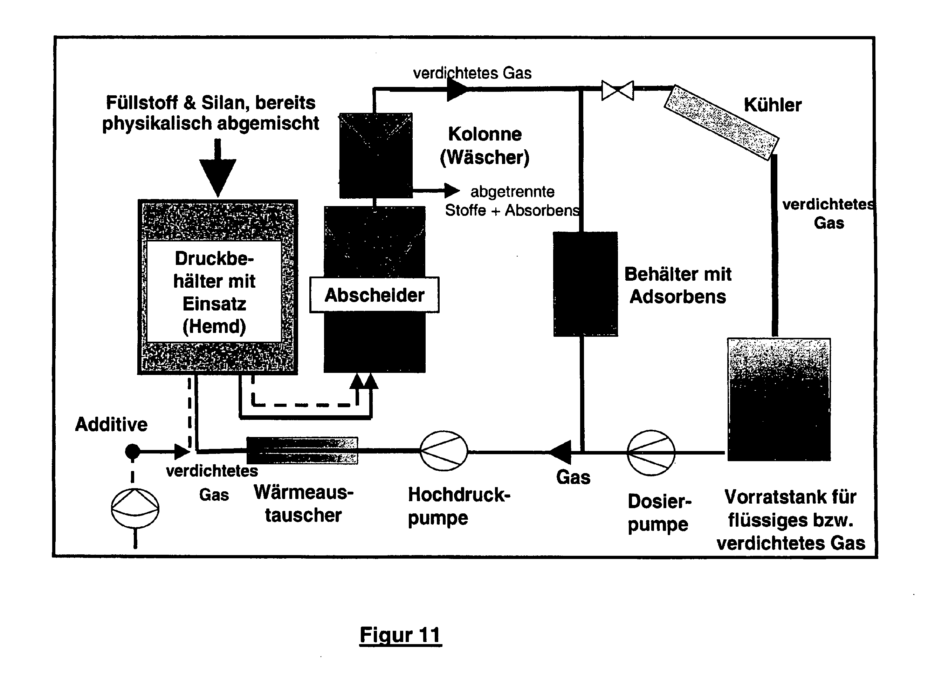

Die Figuren 8-11 stellen Varianten und Kombinationen des Aufbaus von Hochdruckextraktionsanlagen in denen das erfindungsgemäße Verfahren ausgeführt werden kann dar.

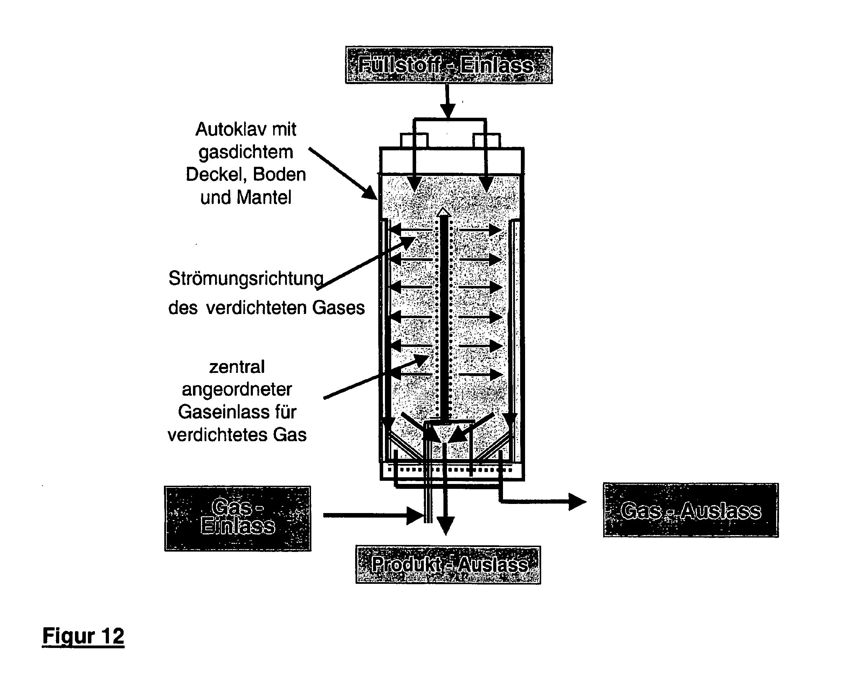

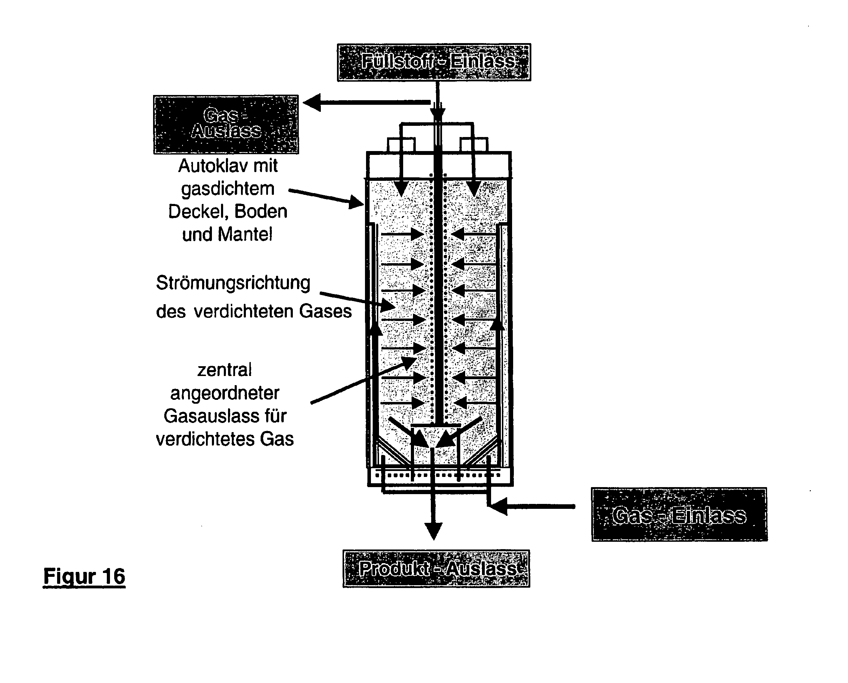

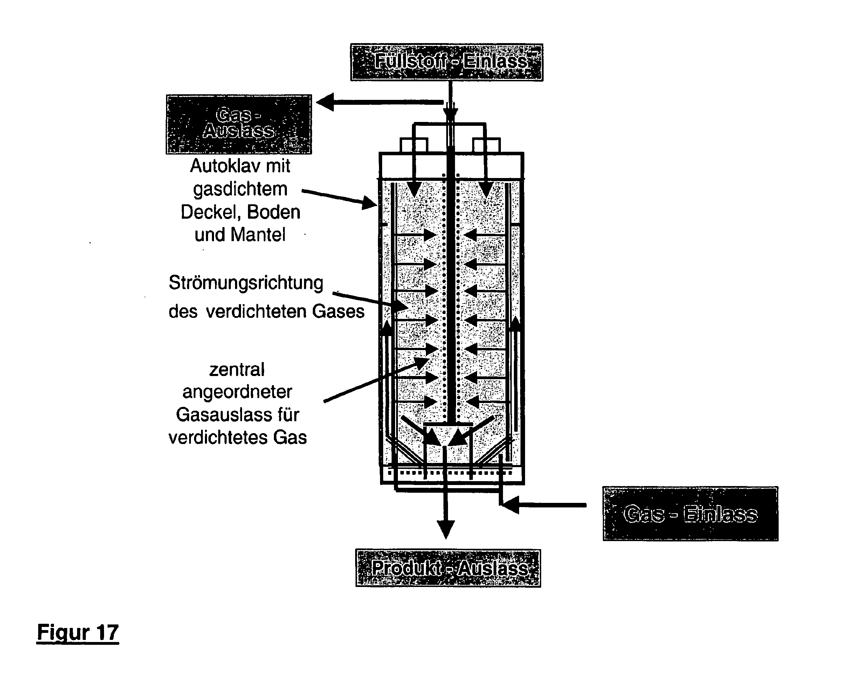

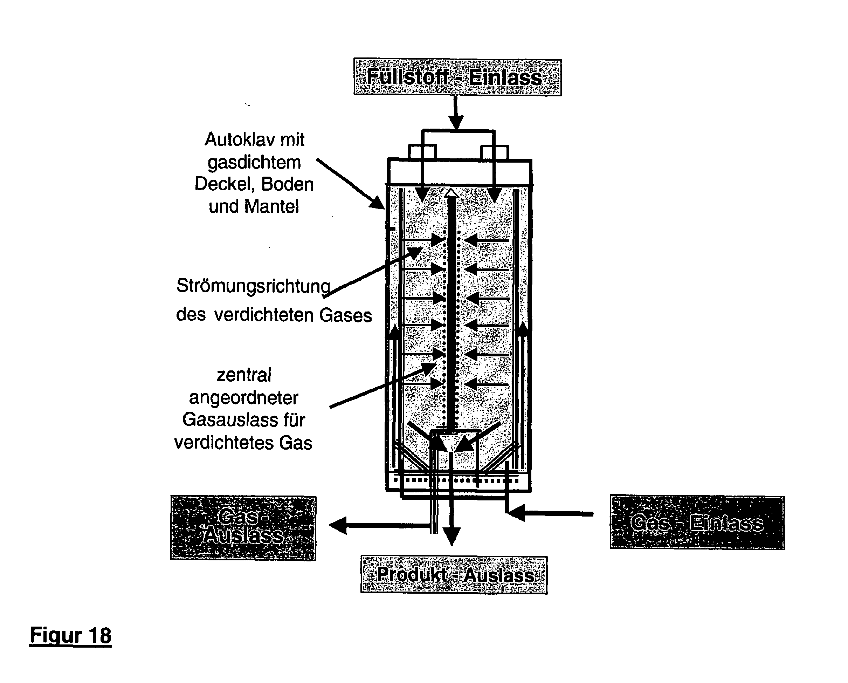

Das verdichtete Gas kann in das zentriert angeordnete, axiale Zentralrohr des Druckbehälters eingespeist und dann durch Öffnungen, Poren oder ähnlichem radial in die Schüttung austreten, von wo es nach außen strömt. Die an den Füllstoff angrenzende Innenwand des im Druckgefäß befindlichen Hemdes kann zweckmäßigerweise in der Lage sein, das verdichtete Gas passieren zu lassen und gleichzeitig die Füllstoffe zurückzuhalten (Figur 12-18). Dazu kann das Material mit dafür geeigneten, entsprechend dimensionierten Vorrichtungen wie Löchern, Spalten, Mikroporen, Makroporen, Lochungen, Schikanen oder ähnlichem versehen sein.

Das Verfahren kann ohne kontinuierliche oder diskontinuierliche Rühr- oder Umwälzvorrichtung für die Silan/Füllstoff-Mischung während der Extraktion der Stoffe vom modifizierten Füllstoff eingesetzt werden.

Der Autoklav oder Druckbehälter kann keine kontinuierlichen oder diskontinuierlichen Rühr- oder Umwälzvorrichtung für die Silan/Füllstoff-Mischung während der Extraktion der Stoffe vom modifizierten Füllstoff enthalten. Rühr- oder Umwälzvorrichtung können beispielsweise Hubrührer, Blattrührer, Balkenrührer, Lochbalkenrührer, Kreuzbalkenrührer, Ankerrührer, Gitterrührer, Schaufelwalze, Propellerrührer, Schneckenrührer, Turbinenrührer, Scheibenrührer, Planetenrührer oder Impellerrührer sein.

Das verdichtete Gas kann die Schüttung radial durchströmen, beziehungsweise der Schüttung radial zugeführt werden, beziehungsweise diese wieder in radialer Richtung verlassen. Für die Erreichung einer zufriedenstellenden Extraktionsrate von Stoffen vom silanmodifizierten Füllstoff kann es nicht wesentlich sein, ob das verdichtete Gas den Füllstoff radial von Innen nach Außen oder radial von Außen nach Innen durchströmt.

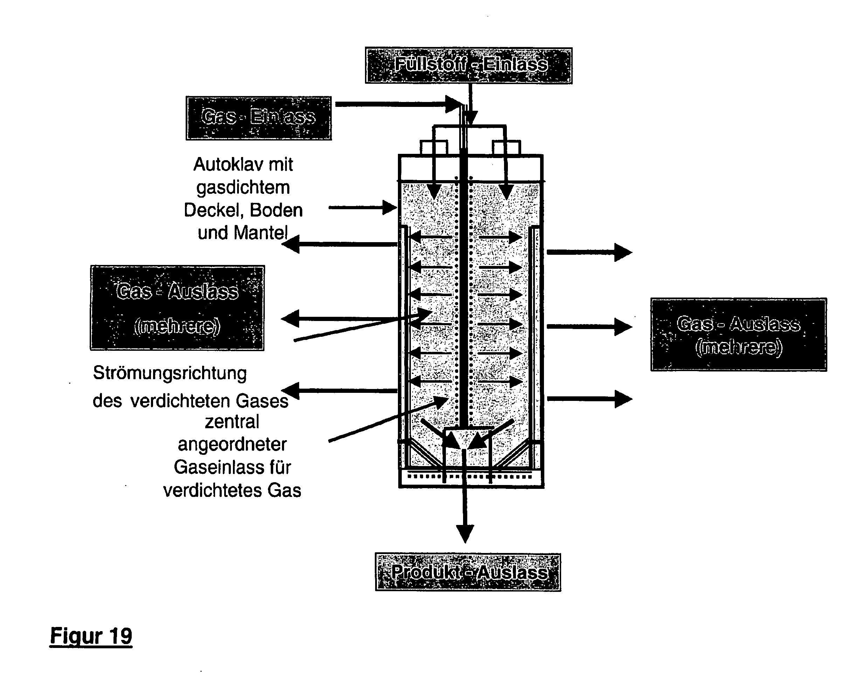

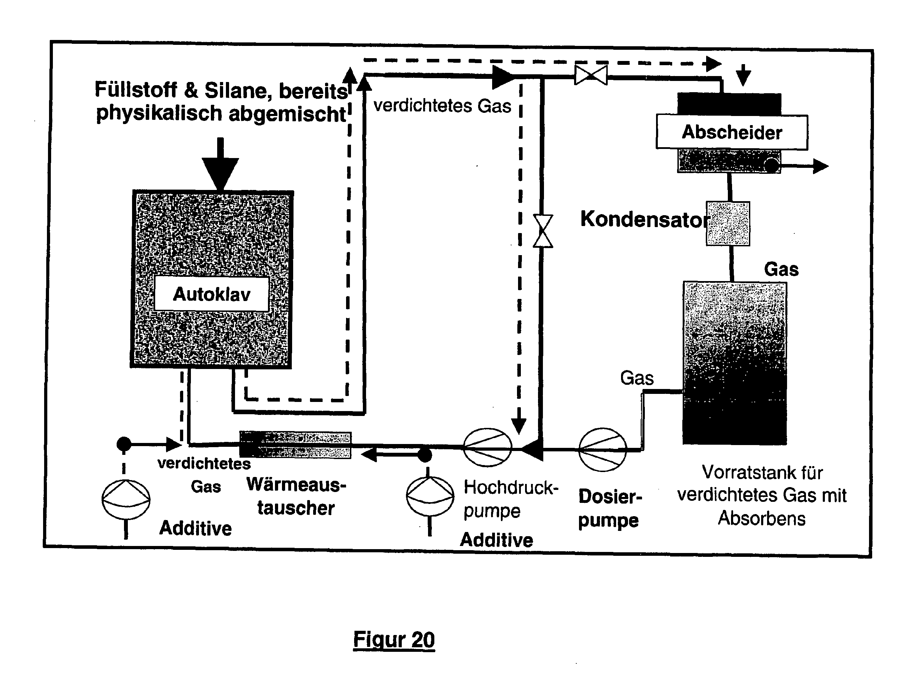

Bezüglich der radialen Fahrweise kann es sich in der im Betrieb gegebenen Praxis als günstig erweisen, wenn die Strömungsrichtung von Innen nach Außen verläuft (Figur 12 - 14 + 19). Es kann ein geringes Driften der Füllstoffpartikel nach außen beobachtet werden, so daß ein Frei- und Schutzraum rund um das Zentralrohr entsteht. Eine Verpressung von Füllstoffen am Innenrand des Hemdes kann möglich sein, wird aber nicht beobachtet.

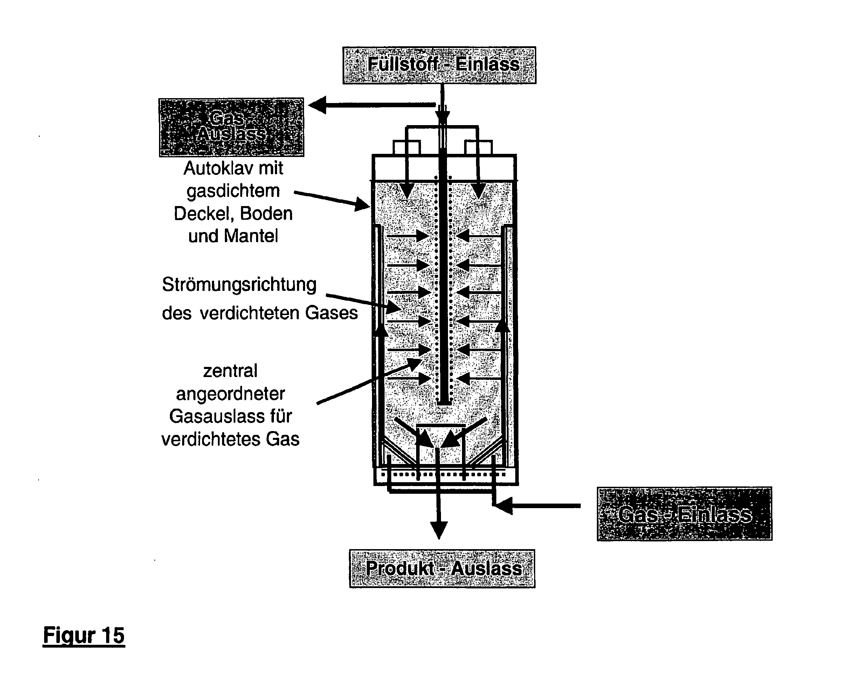

Die Gasführung von Außen nach Innen (Figur 15 - 18) kann theoretisch Vorteile gegenüber der Gasführung von Innen nach Außen aufweisen. Eine einfache Austragung der silanmodifizierten Füllstoffe aus dem Druckbehälter, zum Beispiel durch Absaugung nach Oben oder Unten, nach beendeter Extraktion kann dadurch begünstigt werden.

In Figur 12 ist eine Variante einer Zuleitung des verdichteten Gases von unten dargestellt. Diese Anordnung hat zum Beispiel den Vorteil, daß das zentrale Gaseinleitungsrohr am Boden fest und dauerhaft mechanisch verankert werden kann. In der Abbildung wird angedeutet, daß die Länge des Zentralrohres bei dieser Ausführung der Erfindung mit der Füllhöhe des Füllstoffes und der Höhe des gasdurchlässig ausgeführten Hemdes abgestimmt sein soll.

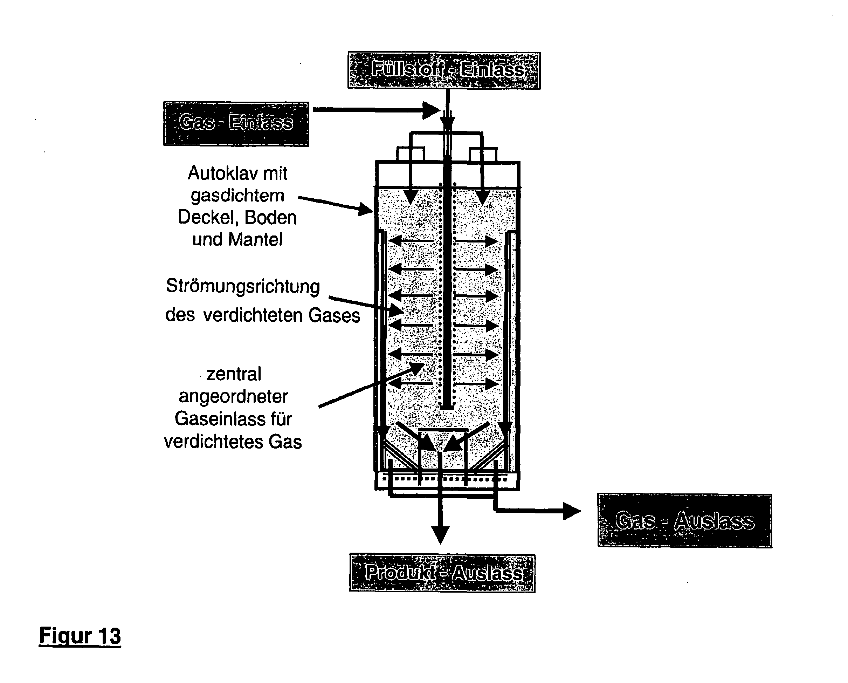

In Figur 13 ist eine Variante einer Zuleitung des verdichteten Gases von oben dargestellt. Diese Anordnung hat zum Beispiel den Vorteil, daß am Boden der ersten Vorrichtung und des Druckautoklaven bei der Installation von Austragshilfen für den modifizierten Füllstoff erhöhte Freiheitsgrade bestehen.

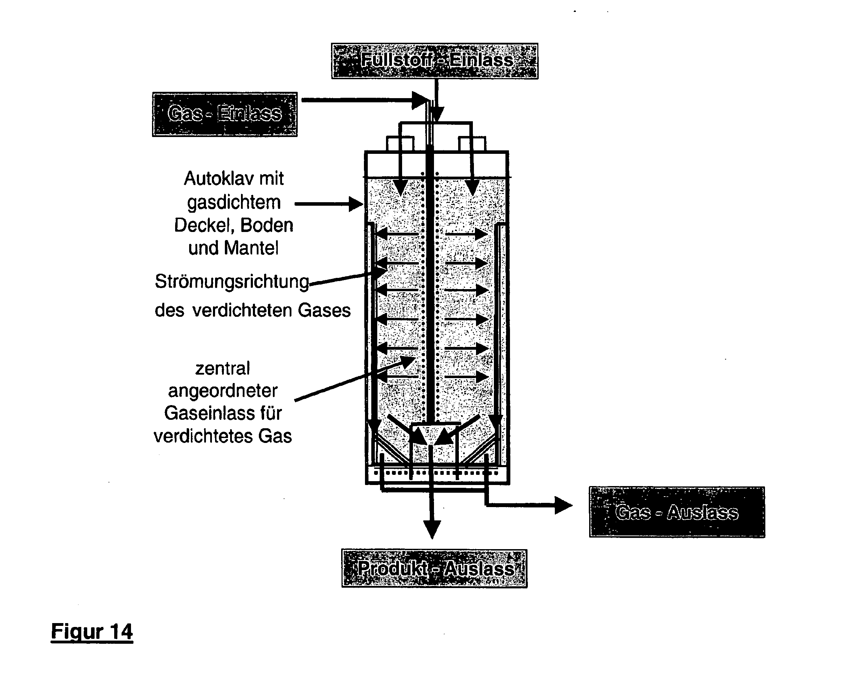

In Figur 14 ist eine Variante einer Zuleitung des verdichteten Gases von oben dargestellt. Diese Anordnung hat zum Beispiel den Vorteil, daß am Boden des Druckautoklaven bei der Installation von Austragshilfen für den modifizierten Füllstoff erhöhte Freiheitsgrade bestehen. Die mechanische Belastung des Zentralrohres durch seitliche Auslenkungskräfte ist im Vergleich zur Ausführung nach Figur 12 unproblematischer, da das Zentralrohr unten und oben fixiert beziehungsweise befestigt wird.

Die technische Ausführung der Erfindung kann in unterschiedlicher Form und Weise erfolgen. Die technische Ausführung der Erfindung kann in technischen, werkstofftechnischen, beziehungsweise verfahrentechnischen Details variieren.

Das erfindungsgemäße Verfahren kann in mindestens einem Druckautoklaven oder in mindestens zwei in Reihe oder parallel geschalteten Druckbehältern durchgeführt werden.

Der silanmodifizierte oxidische oder silikatische Füllstoff, kann dadurch erhalten werden, daß man mindestens einen oxidischen oder silikatischen Füllstoff in einem mittels Druck und / oder Temperatur verdichteten Gas mit mindestens einem Silan umsetzt.

Der silanmodifizierte oxidische oder silikatische Füllstoff kann erhältlich sein, indem man mindestens einen mikrogeperlten, granulierten oder pulverförmigen oxidischen oder silikatischen Füllstoff in einem verdichteten Gas mit mindestens einem Silan umsetzt.

Als Silan können Alkoxysilane eingesetzt werden. Als Alkoxysilan können organisch modifizierte Alkoxysilane, teilweise hydrolisierte, organisch modifizierte Alkoxysilane, vollständig hydrolisierte, organisch modifizierte Alkoxysilane, oder Gemische davon, eingesetzt werden.

Der silanmodifizierte, oxidische oder silikatische Füllstoff kann einen Gehalt an physikalisch und chemisch gebundenen Stoffen zwischen 0 und 50 Gew.-%, bevorzugt zwischen 0 und 30 Gew.-%, besonders bevorzugt zwischen 0 und 15 Gew.-%, aufweisen.

Der silanmodifizierte, oxidische oder silikatische Füllstoff kann als physikalisch und chemisch gebundene Stoffe beispielsweise organisch modifizierte Alkoxysilane, teilweise hydrolisierte, organisch modifizierte Alkoxysilane, vollständig hydrolisierte, organisch modifizierte Alkoxysilane, Alkohole, Amine, Wasser, elementaren Schwefel, Carbonsäuren, Silikonoligomere beziehungsweise Silikonöle oder Alkalisulfate enthalten.

Der silanmodifizierte, oxidische oder silikatische Füllstoff kann nach der Extraktion mit einem verdichteten Gas einen chemisch oder physikalisch gebundenen Restgehalt des vom Alkoxysilan stammenden Alkohols von kleiner 100 Mol-%, bevorzugt kleiner 75 Mol-%, besonders bevorzugt kleiner 30 Mol-%, insbesondere bevorzugt kleiner 15 Mol-%, des im aufgebrachten Silan enthaltenen, durch Hydrolyse freisetzbaren Alkohols aufweisen.

Der silanmodifizierte oxidische oder silikatische Füllstoff kann 0,1 bis 50 Gew.-%, vorzugsweise 0,1 bis 25,0 Gew.-%, besonders bevorzugt 0,1 bis 15 Gew.-%, Silan enthalten.

Das Silan kann chemisch und/oder physikalisch mit der Oberfläche der Füllstoffe verbunden sein.

Als Silan kann man eine Organosiliziumverbindung oder Mischungen von Organosiliziumverbindungen der allgemeinen Formel (I)

Z-A-Sₓ-A-Z (I)

verwenden, in der
x eine Zahl von 1 bis 14, vorzugsweise 1 bis 8, besonders bevorzugt 2 bis 6, ist,
Z gleich SiX¹X²X³ ist und
X¹, X², X³ jeweils unabhängig voneinander bedeuten können Wasserstoff (-H),
Halogen (-Cl, -Br, -I) oder Hydroxy (-OH),
eine lineare, verzweigte oder ringförmige
Kohlenwasserstoffkette mit 1-18 Kohlenstoffatomen (C1-C18), bevorzugt mit C1-C10, vorzugsweise Methyl- ,Ethyl-, Propyl- oder Butyl-,
ein Alkylsäure- (CₓH₂ₓ₊₁)-C(=O)O-, Alkenylsäuresubstituent, beispielsweise Acetoxy- CH₃-(C=O)O-,
ein substituierter Alkyl-, beziehungsweise
Alkenylsäuresubstituent, zum Beispiel Oximato- R'₂C=NO-, ein Cycloalkanrest mit 5-12 Kohlenstoffatomen,
ein Benzylrest oder ein halogen- oder alkylsubstituierter Phenylrest,
Alkoxygruppen, vorzugsweise (C₁-C₂₄) Alkoxy, mit linearen oder verzweigten Kohlenwasserstoffketten, besonders bevorzugt sind Methoxy- (CH₃O-), Ethoxy- (C₂H₅O-), Propoxy-(C₃H₇O-) oder Butoxy- (C₄H₉O-) sowie Dodecyloxy- (C₁₂H₂₅O-), Tetradecyloxy- (C₁₄H₂₉O-), Hexadecyloxy- (C₁₆H₃₃O-) und Octadecyloxy- (C₁₈H₃₇O-),
Alkoxygruppen mit linearen oder verzweigten Polyetherketten mit C₁-C₅₀ Atomen, beispielsweise der Form -O-(CH₂-CH₂-O-)_{z}-Alkyl, -O-(C(CH₃)H-CH₂-O-)_{z}-Alkyl oder -O-(CH₂-C(CH₃)H-O-)_{z}-Alkyl mit z = 1-15, vorzugsweise z = 1-10, besonders bevorzugt z=2-8,
und Alkyl = C1-C30, vorzugsweise C1-C20, besonders bevorzugt C8-C18, verzweigt und/oder unverzweigt,
eine Cycloalkoxygruppe mit (C₅₋₁₂)-Atomen,
eine halogen- oder alkylsubstituierte Phenoxygruppe oder eine Benzyloxygruppe,
A eine lineare oder verzweigte, gesättigte oder ungesättigte aliphatische, aromatische oder gemischt aliphatische/aromatische zweibindige C₁-C₃₀, vorzugsweise C₁-C₃, Kohlenwasserstoffkette, vorzugsweise C₁-C₃, besonders bevorzugt (-CH₂-), (-CH₂-)₂, (-CH₂-)₃, (-CH(CH₃)-CH₂-) oder (-CH₂-CH(CH₃)-), ist.

A kann linear oder verzweigt sein und gesättigte wie auch ungesättigte Bindungen enthalten. A kann anstatt mit Wasserstoffsubstituenten mit verschiedensten Substituenten versehen sein, wie zum Beispiel -CN, Halogenen, beispielsweise -Cl, -Br oder -F, Alkoholfunktionalitäten-OH, Alkoxiden -OR' beziehungsweise -O-(C=O)-R' (R' = Alkyl, Aryl). A kann bevorzugt CH₂, CH₂CH₂, CH₂CH₂CH₂, CH₂CH(CH₃), CH₂CH₂CH₂CH₂, CH₂CH₂CH(CH₃), CH₂CH(CH₃)CH₂, CH₂CH₂CH₂CH₂CH₂, CH₂CH(CH₃)CH₂CH₂, CH₂CH₂CH(CH₃)CH₂, CH(CH₃)CH₂CH(CH₃) oder CH₂CH(CH₃)CH(CH₃) sein.

Als Silan der allgemeinen Formel (I) kann man beispielsweise folgende Verbindungen verwenden:
[(MeO)₃Si(CH₂)₃]₂S, [(MeO)₃Si(CH₂)₃]₂S₂, [(MeO)₃Si(CH₂)₃]₂S₃,
[(MeO)₃Si(CH₂)₃]₂S₄, [(MeO)₃Si(CH₂)₃]₂S₅, [(MeO)₃Si(CH₂)₃]₂S₆,
[(MeO)₃Si(CH₂)₃]₂S₇, [(MeO)₃Si(CH₂)₃]₂S₈, [(MeO)₃Si(CH₂)₃]₂S₉,
[(MeO)₃Si(CH₂)₃]₂S_{10,} [(MeO)₃Si(CH₂)₃]₂S₁₁, [(MeO)₃Si(CH₂)₃]₂S₁₂,
[(EtO)₃Si(CH₂)₃]₂S, [(EtO)₃Si(CH₂)₃]₂S₂, [(EtO)₃Si(CH₂)₃]₂S₃,
[(EtO)₃Si(CH₂)₃]₂S₄, (EtO)₃Si(CH₂)₃]₂S₅, (EtO)₃Si(CH₂)₃]₂S₆,
[(EtO)₃Si(CH₂)₃]₂S₇, [(EtO)₃Si(CH₂)₃]₂S₈, (EtO)₃Si(CH₂)₃]₂S₉,
[(EtO)₃Si(CH₂)₃]₂S₁₀, [(EtO)₃Si(CH₂)₃]₂S₁₁, [(EtO)₃Si(CH₂)₃]₂S₁₂,
[(EtO)₃Si(CH₂)₃]₂S₁₃, [(EtO)₃Si(CH₂)₃]₂S₁₄, [(C₃H₇O)₃Si(CH₂)₃]₂S,
[(C₃H₇O)₃Si(CH₂)₃]₂S₂, [(C₃H₇O)₃Si(CH₂)₃]₂S3,
[(C₃H₇O)₃Si(CH₂)₃]₂S₄, [(C₃H₇O)₃Si(CH₂)₃]₂S₅,
[(C₃H₇O)₃Si(CH₂)₃]₂S₆, [(C₃H₇O)₃Si(CH₂)₃]₂S₇,
[(C₃H₇O)₃Si(CH₂)₃]₂S₈, [(C₃H₇O)₃Si(CH₂)₃]₂S₉,
[(C₃H₇O)₃Si(CH₂)₃]₂S₁₀, [(C₃H₇O)₃Si(CH₂)₃]₂S₁₁,
[(C₃H₇O)₃Si(CH₂)₃]₂S₁₂, (C₃H₇O)₃Si(CH₂)₃]₂S₁₃,
[(C₃H₇O)₃Si(CH₂)₃]₂S₁₄,
[(C₁₂H₂₅O)(EtO)₂Si(CH₂)₃]Sₓ[(CH₂)₃Si(OEt)₃],
[(C₁₂H₂₅O)₂(EtO)Si(CH₂)₃]Sₓ[(CH₂)₃Si(OEt)₃],
[(C₁₂H₂₅O)₃Si(CH₂)₃]Sₓ[(CH₂)₃Si(DEt)₃]_{,}
[(C₁₂H₂₅O)(EtO)₂Si(CH₂)₃]Sₓ[(CH₂)₃Si(C₁₂H₂₅O)(OEt)₂],
[(C₁₂H₂₅O)₂(EtO)Si(CH₂)₃]Sₓ[(CH₂)3Si(C₁₂H₂₅O)(OEt)₂],
[(C₁₂H₂₅O)₃Si(CH₂)₃]Sₓ[(CH₂)₃Si(C₁₂H₂₅O)(OEt)₂],
[(C₁₂H₂₅O)(EtO)₂Si(CH₂)₃]Sₓ[(CH₂)₃Si(C₁₂H₂₅O)₂(OEt)],
[(C₁₂H₂₅O)₂(EtO)Si(CH₂)₃]Sₓ[(CH₂)₃Si(C₁₂H₂₅O)₂(OEt)],
[(C₁₂H₂₅O)Si(CH₂)₃]Sₓ[(CH₂)₃Si(C₁₂H₂₅O)₂(OEt)],
[(C₁₂H₂₅O)(EtO)₂Si(CH₂)₃]Sₓ[(CH₂)₃Si(C₁₂H₂₅O)₃],
[(C₁₂H₂₅O)₂(EtO)Si(CH₂)3]Sₓ[(CH₂)₃Sᵢ(C₁₂H₂₅O)₃],
[(C₁₂H₂₅O)₃Si(CH₂)₃]Sₓ[(CH₂)₃Si-(C₁₂H₂₅O)₃]
(C₁₄H₂₉O)(EtO)₂Si(CH₂)₃]Sₓ[(CH₂)₃Si(OEt)₃],
[(C₁₄H₂₉O)₂(EtO)Si(CH₂)₃]Sₓ[(CH₂)₃Si(OEt)₃],
[(C₁₄H₂₉O)₃Si(CH₂)₃]Sₓ[(CH₂)₃Si(OEt)₃],
[(C₁₄H₂₉O)(EtO)₂Si(CH₂)₃]Sₓ(CH₂)₃Si(C₁₄H₂₉O)(DEt)₂],
[(C₁₄H₂₉O)₂(EtO)Si(CH₂)₃]Sₓ[(CH₂)₃Si(C₁₄H₂₉O)(OEt)₂],
[(C₁₄H₂₉O)₃Si(CH₂)₃]Sₓ[(CH₂)₃Si(C₁₄H₂₉O)(OEt)₂],
[(C₁₄H₂₉O)(EtO)₂Si(CH₂)₃]Sₓ[(CH₂)₃Si(C₁₄H₂₉O)₂(OEt)],
[(C₁₄H₂₉O)₂(EtO)Si((CH₂)₃]Sₓ[(CH₂)₃Si(C₁₄H₂₉O)₂(OEt)],
[(C₁₄H₂₉O)₃Si(CH₂)₃]Sx[(CH₂)₃Si(C₁₄H₂₉O)₂(OEt)],
[(C₁₄H₂₉O)(EtO)₂Si(CH₂)₃]Sₓ[(CH₂)₃Si(C₁₄H₂₉O)₃],
(C₁₄H₂₉O)₂(EtO)Si(CH₂)₃]Sₓ[(CH₂)₃Si(C₁₄H₂₉O)₃],
[(C₁₄H₂₉O)₃Si(CH₂)₃]Sₓ[(CH₂)₃Si(C₁₄H₂₉O)3],
(C₁₆H₃₃O)(EtO)₂Si(CH₂)₃]Sₓ[(CH₂)₃Si(OEt)₃],
[(C₁₆H₃₃O)₂(EtO)Si(CH₂)₃]Sₓ[(CH₂)₃Si(OEt)₃],
[(C₁₆H₃₃O)₃Si(CH₂)₃]Sₓ[(CH₂)₃Si(OEt)₃],
[(C₁₆H₃₃O)(EtO)₂Si(CH₂)3]Sₓ[(CH₂)₃Si(C₁₆H₃₃O)(OEt)₂],
[(C₁₆H₃₃O)₂(EtO)Si(CH₂)₃]Sₓ[(CH₂)₃Si(C₁₆H₃₃O)(OEt)₂],
[(C₁₆H₃₃O)₃Si(CH₂)₃]Sₓ[(CH₂)₃Si(C₁₆H₃₃O)(OEt)₂],
[(C₁₆H₃₃O)(EtO)₂Si(CH₂)₃]Sₓ[(CH₂)₃Si(C₁₆H₃₃O)₂(DEt)],
[(C₁₆H₃₃O)₂(EtO)Si(CH₂)₃]Sₓ[(CH₂)₃Si(C₁₆H₃₃O)₂(OEt)],
[(C₁₆H₃₃O)₃Si(CH₂)₃]Sₓ[(CH₂)₃Si(C₁₆H₃₃O)₂(OEt)],
[(C₁₆H₃₃O)(EtO)₂Si(CH₂)₃]Sₓ[(CH₂)₃Si(C₁₆H₃₃O)₃],
[(C₁₆H₃₃O)₂(EtO)Si(CH₂)₃]Sₓ[(CH₂)₃Si(C₁₆H₃₃O)₃],
[(C₁₆H₃₃O)₃Si(CH₂)₃]Sₓ[(CH₂)₃Si(C₁₆H₃₃O)₃],
(C₁₈H₃₇O)(EtO)₂Si(CH₂)₃]Sₓ[(CH₂)₃Si(OEt)₃],
[(C₁₈H₃₇O)₂(EtO)Si(CH₂)₃]Sₓ[(CH₂)₃Si(OEt)₃],
[(C₁₈H₃₇O)₃Si(CH₂)₃]Sₓ[(CH₂)₃Si(OEt)₃],
[(C₁₈H₃₇O)(EtO)₂Si(CH₂)₃]Sₓ[(CH₂)₃Si(C₁₈H₃₇O)(OEt)₂],
[(C₁₈H₃₇O)₂(EtO)Si(CH₂)₃]Sₓ[(CH₂)₃Si(C₁₈H₃₇O)(OEt)₂],
[(C₁₈H₃₇O)₃Si(CH₂)₃]Sₓ[(CH₂)₃Si(C₁₈H₃₇O)(OEt)₂],
[(C₁₈H₃₇O)(EtO)₂Si(CH₂)₃]Sₓ[(CH₂)₃Si(C₁₈H₃₇O)₂(OEt)],
[(C₁₈H₃₇O)₂(EtO)Si(CH₂)₃]Sₓ[(CH₂)₃Si(C₁₈H₃₇O)₂(OEt)],
[(C₁₈H₃₇O)₃Si(CH₂)₃]Sₓ[(CH₂)₃Si(C₁₈H₃₇O)₂(OEt)],
[(C₁₈H₃₇O)(EtO)₂Si(CH₂)₃]Sₓ[(CH₂)₃Si(C₁₈H₃₇O)₃],
[(C₁₈H₃₇O)₂(EtO)Si(CH₂)₃]Sₓ[(CH₂)₃Si(C₁₈H₃₇O)₃] oder
[(C₁₈H₃₇O)₃Si(CH₂)₃]Sₓ[(CH₂)₃Si(C₁₈H₃₇O)₃].

Als Silan der Formel I können auch solche Verbindungen, wie beschrieben in DE 10122269.6 verwendet werden.

Als Silan kann man eine Organosiliziumverbindung oder Mischungen von Organosiliziumverbindungen der allgemeinen Formel (II)

X¹X²X³Si-A-S-SiR¹R²R³ (II)

verwenden, in der
X¹, X², X³ und A unabhängig voneinander dieselbe Bedeutung wie in Formel (I) haben,
R¹, R², R³ jeweils unabhängig voneinander sind und
(C₁-C₁₆) Alkyl, vorzugsweise (C₁-C₄) Alkyl, besonders bevorzugt Methyl- und Ethyl-,
(C₁-C₁₆) Alkoxy, vorzugsweise (C₁-C₄) Alkoxy, besonders bevorzugt Methoxy und Ethoxy,
(C₁-C₁₆) Haloalkyl, Aryl, (C₇-C₁₆) Aralkyl, -H, Halogen oder X¹X²X³Si-A-S- bedeuten.

Als Silan der allgemeinen Formel (II) kann man beispielsweise folgende Verbindungen verwenden:
(EtO)₃-Si-(CH₂)₃-S-Si(CH₃)₃, [(EtO)₃-Si-(CH₂)₃-S]₂Si(CH₃)₂,
[(EtO)₃-Si-(CH₂)₃-S]₃Si(CH₃), [(EtO)₃-Si-(CH₂)₃-S]₂Si(OEt)₂,
[(EtO)₃-Si-(CH₂)₃-S]₄Si, (EtO)₃-Si-(CH₂)₃-S-Si(OEt)₃,
(MeO)₃-Si-(CH₂)₃-S-Si(C₂H₅)₃, [(MeO)₃-Si-(CH₂)₃-S]₂Si(C₂H₅)₂,
[(MeO)₃-Si-(CH₂)₃-S]₃Si(CH₃), [MeO)₃-Si-(CH₂)₃-S]₂Si(OMe)₂,
[(MeO)₃-Si-(CH₂)₃-S]₄Si, (MeO)₃-Si-(CH₂₎₃-S-Si(OMe)₃,
(EtO)₃-Si-(CH₂)₂-CH(CH₃)-S-Si(CH₃)₃,
₍EtO)₃-Si-(CH₂)₂-CH(CH₃)-S-Si(C₂H₅)₃,
(EtO)₃-Si-(CH₂)₂-CH(CH₃)-S-Si(C₆H₅)₃ oder
(EtO)₃-Si-(CH₂)₂(p-C₆H₄)-S-Si(CH₃)₃.

Als Silan kann man eine Organosiliziumverbindung oder Mischungen von Organosiliziumverbindungen der allgemeinen Formel (III)

X¹X²X³Si-Alk (III)

verwenden, in der
X¹, X² und X³ jeweils unabhängig voneinander dieselbe Bedeutung wie in Formel (I) haben und
Alk ein geradkettiges, verzweigtes oder zyklisches (C₁-C₁₈)Alkyl, beispielsweise Methyl-, Ethyl-, n-Propyl, n-Butyl, n-Pentyl, n-Hexyl, Isopropyl oder tert.-Butyl, (C₁-C₅) Alkoxy, beispielsweise Methoxy-, Ethoxy-, Propoxy-, Butoxy-, Isopropoxy-, Isobutoxy-, t-Butoxy- oder Pentoxy, Halogen, beispielsweise Fluor, Chlor, Brom oder Jod, Hydroxy, Thiol, Nitril, (C₁-C₄) Haloalkyl, -NO₂, (C₁-C₈) Thioalkyl, -NH₂, -NHR¹, -NR¹R², NH(SiX¹X²X³), Alkenyl, Allyl-, Vinyl-, Aryl oder (C₇-C₁₆) Aralkyl ist.

Unter der Bezeichnung Alkenyl- können die Vinylgruppe sowie geradkettige, verzweigte oder zyklische Fragmente zusammengefaßt werden, die eine oder mehrere Kohlenstoffdoppelbindungen enthalten können.

Unter der Bezeichnung zyklische Alkyl- oder Alkenylfragmente können sowohl monocyclische als auch bicyclische oder polyzyklische Strukturen, sowie zyklische Strukturen, die mit Alkylsubstituenten, beispielsweise Norbornyl-, Norbornenyl-, Ethylnorbornyl-, Ethylnorbornenyl-, Ethylcyclohexyl-, Ethylcyclohexenyl-, oder Cyclohexylcyclohexyl-Gruppen versehen sind, zusammengefaßt werden.

Unter Aryl können Phenyle, Biphenyle oder sonstige benzoide Verbindungen verstanden werden, die gegebenenfalls mit (C₁-C₃)Alkyl-, (C₁-C₃)Alkoxy-, Halogen-, Hydroxy- oder mit Heteroatomen, wie NR¹R²OR¹, PR¹R²R³, SH oder SR¹ substituiert sind.

Als Silan der allgemeinen Formel (III) kann man beispielsweise folgende Verbindungen verwenden:
(C₁₂H₂₅O)₃-Si-(CH₂)₁₆-H, (C₁₄H₂₉O)₃-Si-(CH₂)₁₆-H,
(C₁₆H₃₃O)₃-Si-(CH₂)₁₆-H, (C₁₈H₃₇O)₃-Si-(CH₂)₁₆-H,
(EtO)₃-Si-(CH₂)₃-H, (MeO)₃-Si-(CH₂)₃-H, (EtO)₃-Si-C(CH₃)₃,
(MeO)₃-Si-C(CH₃)₃, (EtO)₃-Si-(CH₂)₈-H, (MeO)₃-Si-(CH₂)₈-H,
(EtO)₃-Si-(CH₂)₁₆-H, (MeO)₃-Si-(CH₂)₁₆-H, (Me)₃Si-(OMe),
((Et)₃Si-(OMe), (C₃H₇)₃Si-(OMe), (C₆H₅)₃Si-(OMe),
(Me)₃Si-(OEt), ((Et)₃Si-(OEt), (C₃H₇)₃Si-(OEt),
(C₆H₅)₃Si-(OEt), (Me)₃Si-(OC₃H₇), (Et)₃Si-(OC₃H₇),
(C₃H₇)₃Si-(OC₃H₇), (C₆H₅)₃Si-(OC₃H₇)), (Me)₃SiCl, (Et)₃SiCl,
(C₃H₇)₃SiCl, (C₆H₅)₃SiCl, Cl₃-Si-CH₂-CH=CH₂, (MeO)₃-Si-CH₂-CH=CH₂, (EtO)₃-Si-CH₂-CH=CH₂, (EtO)₃-Si-CH₂-CH=CH₂ Cl₃-Si-CH=CH₂, (MeO)₃-Si-CH=CH₂, (EtO)₃-Si-CH=CH₂, (Me₃Si)₂N-C(O)-H
oder (Me₃Si)₂N-H.

Als Silan kann man eine Organosiliziumverbindung oder eine Mischung von Organosiliziumverbindungen der allgemeinen Formeln (IV) oder (V)

[[(ROC(=O))ₚ-(G)ⱼ]ₖ-Y-S]ᵣ-G-(SiX¹X²X³)ₛ (IV)

[(X¹X²X³Si)_{q}-G]₁-[Y-[S-G-SiX¹X²X³]_{b}]_{c} (V)

verwenden,
in der Y eine polyvalente Spezies (Q)_{z}D(=E) darstellt,
wobei folgendes gilt:
p ist 0 bis 5, r ist 1 bis 3, z ist 0 bis 2, q ist 0 bis 6, a ist 0 bis 7, b ist 1 bis 3, j ist 0 bis 1, aber es kann, wenn p = 1 auch häufig 0 sein, c ist 1 bis 6, bevorzugt 1 bis 4, s ist 1 bis 3, k ist 1 bis 2, unter der Voraussetzung, daß
(1) falls (D) ein Kohlenstoff, Schwefel oder Sulfonyl ist, gilt, daß a + b = 2 und k = 1,
(2) falls (D) ein Phosphoratom ist, gilt, daß a + b = 3 solange c ≥ 1 und b = 1, wobei a = c + 1,
(3) falls (D) ein Phosphoratom ist, gilt, daß k = 2, ist, Y eine polyvalente Spezies (Q)_{z}D(=E) darstellt, bevorzugt - C(=NR)-, -SC(=NR)-, -SC(=O)-, (-NR)C(=O)-, (-NR)C(=S)-, - OC(=O)-, -OC(=S)-, -C(=O)-, -SC(=S)-, -C(=S)-, -S(=O)-, - S(=O)2-, -OS(=O)₂-, (-NR)S(=O)₂-, -SS(=O)-, -OS(=O)-, (NR)S(=O)-, -SS(=O)₂-, (-S)₂P(=O)-, -(-S)P(=O)-, -P(=O)(-)₂, (-S)₂P(=S)-, -(-S)P(=S)-, -P(=S)(-)₂. (-NR)₂P(=O)-, (-NR)(-S)P(=O)-, (-O)(-MR)P(=O)-, (-O)(-S)P(=O)-, (-O)₂P(=O)-, -(-O)P(=O)-, -(-NR)P(=O)-, (-NR)₂P(=S)-, (-NR)(-S)P(=S)-, (-O)(-NR)P(=S)-, (-O)(-S)P(=S)-, (-O)₂P(=S)-, -(-O)P(=S)-, oder -(-NR)P(=S)-,
in jeder dieser Gruppen ist das Atom (D) doppelt mit dem Heteroatom (E) verbunden, das wiederum mit dem Schwefelatom (S) verbunden ist, welches mittels einer Gruppe (G) mit dem Siliziumatom (Si) verknüpft ist,
R unabhängig voneinander H,
eine gerade, zyklische oder verzweigte Alkylkette, vorzugsweise (C₁-C₁₈)Alkyl, besonders bevorzugt (C₁-C₄)Alkyl bedeuten,
gegebenenfalls Alkylketten die ungesättigte Anteile wie Doppelbindungen (Alkene), Dreifachbindungen (Alkine) oder auch Alkylaromaten (Aralkyl) oder Aromaten beinhalten und die die gleichen Bedeutungen wie in Formel (II) aufweisen, G unabhängig von den übrigen Substituenten, Wasserstoff, eine gerade, zyklische oder verzweigte Alkylkette mit (C₁-C₁₈) bedeutet, gegebenenfalls können die Alkylketten einen ungesättigten Anteil, wie Doppelbindungen (Alkene),
Dreifachbindungen (Alkine) oder auch Alkylaromaten (Aralkyl) oder Aromaten beinhalten,
wenn p = 0 in Formel (IV) ist, ist G vorzugsweise Wasserstoff (H),
G entspricht nicht der Struktur eines α, β-ungesättigten Fragments, welches mit dem Y -Fragment in der Weise verbunden ist, daß ein α, β-ungesättigtes Thiocarbonylfragment entsteht,
X¹, x² und X³ jeweils unabhängig voneinander die Bedeutung wie in Formel (I) besitzen.

Ein Index p von 0 bis 2 ist bevorzugt, wobei X¹, X² oder X³ ein RO- beispielsweise RC(=O)O- ist. Besonders bevorzugt ist ein Fragment mit p = 0, X¹, X² beziehungsweise X³ = Ethoxy- und mit G = Alkylgerüst beziehungsweise substituiertes Alkylgerüst mit C₃ bis C₁₂.

In (Q)_{z}D(=E) kann Q Sauerstoff, Schwefel oder (-NR-), D kann Kohlenstoff, Schwefel, Phosphor oder Sulfonyl, E kann Sauerstoff, Schwefel oder (=NR¹) sein.

Bevorzugte Beispiele für die Funktion (-YS-) in den Formeln (IV) und (V) können sein:
Thiocarboxylatester -C(=O)-S-, Dithiocarboxylate -C(=S)-S-, Thiocarbonatester -O-C(=O)-S-, Dithiocarbonateester -S-C(=O)-S- und -O-C(=S)-S-, Trithiocarbonatester -S-C(=S)-S-, Dithiocarbamatester -N-C(=S)-S-, Thiosulfonateester -S(=O)₂-S-, Thiosulfatester -O-S(=O)₂-S-, Thiosulfamatester (-N-)S(=O)₂-S-, Thiosulfinatester -C-S(=O)-S-, Thiosulfitester -O-S(=O)-S-, Thiosulfimatester N-S(=O)-S-, Thiophosphatester P(=O)(O-)₂(S-), Dithiophosphatester P(=O)(O-)(S-)₂ oder P(=S)(O-)₂(S-), Trithiophosphatester P(=O)(S-)₃ oder P(=S)(O-)(S-)₂, Tetrathiophosphatester P(=S)(S-)_{3,} Thiophosphamtester -P(=O)(-N-)(S-), Dthiophosphamatester -P(=S)(-N-)(S-, Thiophosphoramidatester (-N-)P(=O)(O-)(S-), Dithiophosphoramidatester (-N-)P(=O)(S-)₂ oder (-N-)P(=S)(O-)(S-) oder Trithiophosphoramidatester (-N-)P(=S)(S-)₂.

Als Silan der allgemeinen Formel (IV) oder (V) kann man beispielsweise folgende Verbindungen verwenden:
2-Triethoxysilyl-1-ethylthioacetat,
2-Trimethoxysilyl-1-ethylthioacetat,
2-(Methyldimethoxysilyl)-1-ethylthioacetat,
3-Trimethoxysilyl-1-propylthioacetat,
Triethoxysilylmethylthioacetat,
Trimethoxysilylmethylthioacetat,
Triisopropoxysilylmethylthioacetat,
Methyldiethoxysilylmethylthioacetat,
Methyldimethoxysilylmethylthioacetat,
Methyldiisopropoxysilylmethylthioacetat,
Dimethylethoxysilylmethylthioacetat,
Dimethylmethoxysilylmethylthioacetat,
Dimethylisopropoxysilylmethylthioacetat,
2-Triisopropoxysilyl- 1 -ethylthioacetat,
2-(Methyldiethoxysilyl)-1-ethylthioacetat,
2-(Methyldiisopropoxysilyl)-1-ethylthioacetat,
2-(Dimethylethoxysilyl)-1-ethylthioacetat,
2-(Dimethylmethoxysilyl)-1-ethylthioacetat,
2-(Dimethylisopropoxysilyl)-1-ethylthioacetat,
3-Triethoxysilyl-1-propylthioacetat,
3-Triisopropoxysilyl-1-propylthioacetat,
3-Methyldiethoxysilyl-1-propylthioacetat,
3-Methyldimethoxysilyl-1-propylthioacetat,
3-Methyldiisopropoxysilyl-1-propylthioacetat,
1-(2-Triethoxysilyl-1-ethyl)-4-thioacetylcyclohexan,
1-(2-Triethoxysilyl-1-ethyl)-3-thioacetylcyclohexan,
2-Triethoxysilyl-5-thioacetylnorbornen,
2-Triethoxysilyl-4-thioacetylnorbornen,
2-(2-Triethoxysilyl-1-ethyl)-5-thioacetylnorbornen,
2-(2-Triethoxysilyl-1-ethyl)-4-thioacetylnorbornen,
1-(1 -oxo-2-thia-5-triethoxysilylpenyl)benzoesäure,
6-Triethoxysilyl-1-hexylthioacetat,
1-Triethoxysilyl-5-hexylthioacetat,
8-Triethoxysilyl-1-octylthioacetat,
1-Triethoxysilyl-7-octylthioacetat,
6-Triethoxysilyl-1-hexylthioacetat,
1-Triethoxysilyl-5-octylthioacetat,
8-Trimethoxysilyl-1-octylthioacetat,
1-Trimethoxysilyl-7-octylthioacetat,
10-Triethoxysilyl-1-decylthioacetat,
1-Triethoxysilyl-9-decylthioacetat,
1-triethoxysilyl-2-butylthioacetat,
1-Triethoxysilyl-3-butylthioacetat,
1-Triethoxysilyl-3-methyl-2-butylthioacetat,
1-Triethoxysilyl-3-methyl-3-butylthioacetat,
3-Trimethoxysilyl-1-propylthiooctoat,
3-Triethoxysilyl-1-propylthiopalmitat,
3-Triethoxysilyl-1-propylthiooctoat,
3-Triethoxysilyl-1-propylthiotetradecanoat,
3-Triethoxysilyl-1-propylthiohexadecanoat,
3-Triethoxysilyl-1-propylthiooctadecanoat,
3-Triethoxysilyl-1-propylthiobenzoat,
3-Triethoxysilyl-1-propylthio-2-ethylhexanoat,
3-Methyldiacetoxysilyl-1-propylthioacetat,
3-Triacetoxysilyl-1-propylthioacetat,
2-Methyldiacetoxysilyl-1-ethylthioacetat,
2-Triacetoxysilyl-1-ethylthioacetat,
1-Methyldiacetoxysilyl-1-ethylthioacetat oder
1-Triacetoxysilyl-1-ethylthioacetat.

Als Silan der Formeln IV und V können auch solche Verbindungen, wie beschrieben in EP0958298 oder W09909036 eingesetzt werden.

Als Silan kann man eine Organosiliziumverbindung oder eine Mischung von Organosiliziumverbindungen der allgemeinen Formel (VI)

X¹X²X³Si-A-Sub (VI)

verwenden, wobei X¹, X², X³ und A, jeweils unabhängig voneinander, die Bedeutung gemäß Formel (I) haben und Sub
-SH, -NH₂, -NH(A-SiX¹X²X³), -N(A-SiX¹X²X³)₂, O-C(O)-CMe=CH₂, 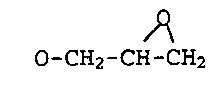 oder -SCN ist.

Als Silan der allgemeinen Formel (VI) kann man beispielsweise folgende Verbindungen verwenden:
(MeO)₃Si-(CH₂)₃-SH, (MeO)₃Si-(CH₂)₃-NH₂, (MeO)₃Si-(CH₂)₃-SCN, (MeO)₃Si- (CH₂)₃-O-C (O) CMe=CH₂,
(EtO)₃Si-(CH₂)₃-NH₂, (EtO)₃Si-(CH₂)₃-SH, (EtO)₃Si-(CH₂)₃-SCN, (EtO)₃Si-(CH₂)₃-O-C(O)CMe=CH₂,
(C₃H₇O)₃Si-(CH₂)₃-SH, (C₃H₇O)₃Si-(CH₂)₃-SCN,
(C₃H₇O)₃Si-(CH₂)₃-O-C(O)CMe=CH₂, (C₃H₇O)₃Si-(CH₂)₃-NH₂,
[(MeO)₃Si-(CH₂)₃-]₂NH, [(EtO)₃Si-(CH₂)₃-]₂NH, [(C₃H₇O)₃Si-(CH₂)₃-]₂NH,
(C₁₂H₂₅O)₃-Si-(CH₂)₃-SH, (C₁₂H₂₅O)₂(MeO)-Si-(CH₂)₃-SH,
(C₁₂H₂₅O)₂(EtO)-Si-(CH₂)₃-SH, (C₁₂H₂₅O)₂(C₁₄H₂₉O)-Si-(CH₂)₃-SH,
(C₁₂H₂₅O)₂(C₁₆H₃₃O)-Si-(CH₂)₃-SH, (C₁₂H₂₅O)₂(C₁₈H₃₇O)-Si-(CH₂)₃-SH, (C₁₄H₂₉O)₃-Si-(CH₂)₃-SH, (C₁₄H₂₉O)₂(MeO)-Si-(CH₂)₃-SH,
(C₁₄H₂₉O)₂(EtO)-Si-(CH₂)₃-SH, (C₁₄H₂₉O)₂(C₁₂H₂₅O)-Si-(CH₂)₃-SH,
(C₁₄H₂₉O)₂(C₁₆H₃₃O)-Si-(CH₂)₃-SH, (C₁₄H₂₉O)₂(C₁₈H₃₇O)-Si-(CH₂)₃-SH, (C₁₆H₃₃O)₃-Si-(CH₂)₃-SH, (C₁₆H₃₃O)₂(MeO)-Si-(CH₂)₃-SH,
(C₁₆H₃₃O)₂(EtO)-Si-(CH₂)₃-SH, (C₁₆H₃₃O)₂(C₁₂H₂₅O)-Si-(CH₂)₃-SH,
(C₁₆H₃₃O)₂(C₁₄H₂₉O)-Si-(CH₂)₃-SH, (C₁₆H₃₃O)₂(C₁₈H₃₇O)-Si-(CH₂)₃-SH, (C₁₈H₃₇O)₃-Si-(CH₂)₃-SH, (C₁₈H₃₇O)₂(MeO)-Si-(CH₂)₃-SH,
(C₁₈H₃₇O)₂(EtO)-Si-(CH₂)₃-SH, (C₁₈H₃₇O)₂(C₁₂H₂₅O)-Si-(CH₂)₃-SH,
(C₁₈H₃₇O)₂(C₁₄H₂₉O)-Si-(CH₂)₃-SH, (C₁₈H₃₇O)₂(C₁₆H₃₃O)-Si-(CH₂)₃-SH,
(C₁₂H₂₅O)₂(MeO)-Si-(CH₂)₃-NH₂, (C₁₂H₂₅O)₂(EtO)-Si-(CH₂)₃-NH₂
(C₁₂H₂₅O)₂(C₁₄H₂₉O)-Si-(CH₂)₃-NH₂, (C₁₂H₂₅O)₂(C₁₆H₃₃O)-Si-(CH₂)₃-NH₂, (C₁₂H₂₅O)₂(C₁₈H₃₇O)-Si-(CH₂)₃-NH₂,
(C₁₄H₂₉O)₂(MeO)-Si-(CH₂)₃-NH₂, (C₁₄H₂₉O)₂(EtO)-Si-(CH₂)₃-NH₂,
(C₁₄H₂₉O)₂(C₁₂H₂₅O)-Si-(CH₂)₃-NH₂, (C₁₄H₂₉O)₂(C₁₆H₃₃O)-Si-(CH₂)₃-NH₂, (C₁₄H₂₉O)₂(C₁₈H₃₇O)-Si-(CH₂)₃-NH₂,
(C₁₆H₃₃O)₂(MeO)-Si-(CH₂)₃-NH₂, (C₁₆H₃₃O)₂(EtO)-Si-(CH₂)₃-NH₂,
(C₁₆H₃₃O)₂(C₁₂H₂₅O)-Si-(CH₂)3-NH₂, (C₁₆H₃₃O)₂(C₁₄H₂₉O)-Si-(CH₂)₃-NH₂, (C₁₆H₃₃O)₂(C₁₈H₃₇O)-Si-(CH₂)₃-NH₂,
(C₁₈H₃₇O)₂(MeO)-Si-(CH₂)₃-NH₂, (C₁₈H₃₇O)₂(EtO)-Si-(CH₂)₃-NH₂,
(C₁₈H₃₇O)₂(C₁₂H₂₅O)-Si-(CH₂)₃-NH₂, (C₁₈H₃₇O)₂(C₁₄H₂₉O)-Si-(CH₂)₃-NH₂, (C₁₈H₃₇O)₂(C₁₆H₃₃O)-Si-(CH₂)₃-NH₂,
(C₁₂H₂₅O)₂(C₁₄H₂₉O)-Si-(CH₂)₃-SCN, (C₁₂H₂₅O)₂(C₁₆H₃₃O)-Si-(CH₂)₃-SCN, (C₁₂H₂₅O)₂(C₁₈H₃₇O)-Si-(CH₂)₃-SCN,
(C₁₄H₂₉O)₂(C₁₂H₂₅O)-Si-(CH₂)₃-SCN, (C₁₄H₂₉O)₂(C₁₆H₃₃O)-Si-(CH₂)₃-SCN, (C₁₄H₂₉O)₂(C₁₈H₃₇O)-Si-(CH₂)₃-SCN,
(C₁₆H₃₃O)₂(C₁₂H₂₅O)-Si-(CH₂)₃-SCN, (C₁₆H₃₃O)₂(C₁₄H₂₉O)-Si-(CH₂)₃-SCN, (C₁₆H₃₃O)₂(C₁₈H₃₇O)-Si-(CH₂)₃-SCN,
(C₁₈H₃₇O)₂(C₁₂H₂₅O)-Si-(CH₂)₃-SCN, (C₁₈H₃₇O)₂(C₁₄H₂₉O)-Si-(CH₂)₃-SCN, (C₁₈H₃₇O)₂(C₁₆H₃₃O)-Si-(CH₂)₃-SCN,
(C₁₂H₂₅O)₂(MeO)-Si-(CH₂)₃-O-C(O)CMe=CH₂,
(C₁₂H₂₅O)₂(EtO)-Si-(CH₂)₃-O-C(O)CMe=CH₂,
(C₁₄H₂₉O)₂(MeO)-Si-(CH₂)₃-O-C(O)CMe=CH₂,
(C₁₄H₂₉O)₂(EtO)-Si-(CH₂)₃-O-C(O)CMe=CH₂,
(C₁₆H₃₃O)₂(MeO)-Si-(CH₂)₃-O-C(O)CMe=CH₂,
(C₁₆H₃₃O)₂(EtO)-Si-(CH₂)₃-O-C(O)CMe=CH₂,
(C₁₈H_{37O})₂(MeO)-Si-(CH₂)₃-O-C(O)CMe=CH₂,
(C₁₈H₃₇O)₂(EtO)-Si-(CH₂)₃-O-C(O)CMe=CH₂,
oder Mischungen der oben genannten Silane.

Als Silan kann man Oligomere, das heisst Oligo- und Polysiloxane, oder Co-Oligomere der Silane der allgemeinen Formel (I)-(VI) oder deren Mischungen verwenden. Die Siloxane können durch Oligomerisierung oder Cooligomerisierung der entsprechenden Silanverbindungen der allgemeinen Formeln (I)-(VI) durch Wasserzugabe und dem Fachmann auf diesem Gebiet bekannte Additivzugabe erhalten werden.

Oligomere Silane sind zum Beispiel in EP 652 245 B1, EP 0 700 951 B1, EP 0 978 525 A2 und DE 199 29 021 A1 beschrieben.

Unter Silan können im Sinne der vorliegenden Erfindung zur Extraktion von Stoffen von silanmodifizierten Füllstoffen auch Mischungen von Silanen verstanden werden, beispielsweise Mischungen der Silane der allgemeinen Formel (I)-(VI) oder Mischungen der oligomeren oder polymeren Siloxane von Silanen der allgemeinen Formel (I)-(VI) oder Mischungen von Silanen der allgemeinen Formel (I)-(VI) mit Mischungen der oligomeren oder polymeren Siloxane von Silanen der allgemeinen Formel (I)-(VI).

Unter unbehandelter oxidischer oder silikatischer Füllstoff kann beispielsweise ein mikrogeperlter, granulärer oder pulverförmiger natürlicher und/oder synthetischer Füllstoff oder Gemische von mikrogeperlten, granulären oder pulverförmigen natürlichen und/oder synthetischen Füllstoffen verstanden werden.

Der silanmodifizierte, oxidische oder silikatische Füllstoff von dem Stoffe mit einem verdichteten Gas extrahiert werden, kann überwiegend pulverförmig, perlförmig, kugelförmig, rund und/oder homogen geformt sein.

Der silanmodifizierte oxidische oder silikatische Füllstoff kann mit Kautschuken verträglich sein und die für diese Verwendung notwendige Feinteiligkeit und Verstärkungswirkung in der Polymermatrix aufweisen.

Als silikatischer Füllstoff kann Silikat, beispielsweise Kaolin, Mica, Kieselgur, Diatomeenerde, Talkum, Wollastonit oder Clay oder auch Silikate unter anderem in Form von Glaskugeln, gemahlenen Glassplittern (Glasmehl), Glasfasern oder Glasgeweben eingesetzt werden.

Als oxidische Füllstoffe können alle Arten von Metalloxiden, beispielsweise Aluminiumoxid, Aluminiumhydroxid oder -trihydrat, zinkoxid, Boroxide, Magnesiumoxide oder auch Übergangsmetalloxide, wie Titandioxid, eingesetzt werden.

Als oxidischer oder silikatischer Füllstoff können des weiteren Aluminiumsilikate, Silikate, Zeolithe, gefällte oder pyrogene Kieselsäuren mit BET-Oberflächen (gemessen mit gasförmigem Stickstoff) von 1 bis 1000 m²/g, bevorzugt bis 300 m²/g, eingesetzt werden.

Beispielsweise können die von der Degussa AG vertriebenen Fällungskieselsäuren Ultrasil 7000, Ultrasil 7005, VN2 oder VN3, sowie die von PPG Industries Inc. vertriebenen Kieselsäuren Hi-Sil® 170G Hi-Sil® 190G, Hi-Sil® 195G, Hi-Sil® 210, Hi-Sil® 233, Hi-Sil® 243LD, Hi-Sil® 315 oder Hi-Sil® EZ und die von der Rhodia vertriebenen Produkte Zeosil 115 GR, Zeosil 125 GR, Zeosil 165 GR, Zeosil 175 GR, Zeosil 195 GR, Zeosil 215 GR, Zeosil 1115 MP, Zeosil 1135 MP, Zeosil 1165 MP, Zeosil 1165 MPS oder Zeosil 1205 MP eingesetzt werden.

Beispielsweise können die von der Degussa AG vertriebenen pyrogenen Kieselsäuren der Aerosil-Serie oder pyrogenen Oxide von Titan, Zink oder anderen Übergangsmetallen eingesetzt werden.

Beispielsweise können die von der Cabot vertriebenen pyrogenen Kieselsäuren der Cabosil-Serie eingesetzt werden.

Auch oxidische oder silikatische Füllstoffe anderer Hersteller, die ähnliche Eigenschaften beziehungsweise Produktcharakteristiken wie die oben genannten Kieselsäuren oder Oxide aufweisen oder ähnliche, vergleichbare analytischen Daten (speziell BET-Oberflächen, CTAB-Oberflächen, BET/CTAB Verhältnis, Searszahl, Perlfraktionen- oder Partikelgrößenverteilungen, Formfaktoren, Kreisformfaktoren und DBP Index) aufweisen, können problemlos zur Herstellung und Extraktion der silanmodifizierten, oxidischen oder silikatischen Füllstoffe verwendet werden.

Als verdichtetes Gas können Verbindungen, die unter normalen Temperatur- und Druckbedingungen gasförmig und als Reaktionsmatrix für die Silan/Füllstoffmischungen geeignet sind, verwendet werden. Beispielsweise können Kohlendioxid, Helium, Stickstoff, Distickstoffmonoxid, Schwefelhexafluorid, gasförmige Alkane mit 1 bis 5 C-Atomen (beispielsweise Methan, Ethan, Propan, n-Butan, Isobutan, Neopentan), gasförmige Alkene mit 2 bis 4 C-Atomen (beispielsweise Ethylen, Propylen, Buten), gasförmige Alkine (beispielsweise Acetylen, Propin und Butin-1), gasförmige Diene (beispielsweise Propadien), gasförmige Fluorkohlenwasserstoffe, Chlor- und/oder Fluorchlorkohlenwasserstoffe (beispielsweise Freone, CKC, HCFC) oder deren aufgrund der laufenden Gesetzgebung verwendeten Ersatzstoffe oder Ammoniak, sowie Gemische dieser Stoffe eingesetzt werden.

Vorzugsweise kann als verdichtetes Gas Kohlendioxid verwendet werden, da es ungiftig, nicht brennbar, wenig reaktionsfähig und kostengünstig ist. Außerdem können die erforderlichen superkritischen Bedingungen beziehungsweise nahe kritischen Bedingungen leicht erreicht werden, denn der kritische Druck beziehungsweise die kritische Temperatur liegen bei nur 73 bar und 31°C.

Verdichtete Gase können zum Beispiel nach E.Stahl, K.W.Quirin, D.Gerard, "Verdichtete Gase zur Extraktion und Raffination", Springer-Verlag, 1988 definiert werden. Verdichtete Gase können überkritische Gase, kritische Gase oder Gase im verflüssigten Zustandsbereich sein.

Überkritische Gase, kritische Gase und Gase im verflüssigten Zustandsbereich werden beispielsweise in P. G. Jessop und W. Leitner "Chemical Synthesis using Supercritical Fluids" Wiley-VCH Verlag, 1999 beschrieben.

Verdichtete Gase können vorteilhafterweise, da sie unter Normalbedingungen gasförmig vorliegen, nach der abgeschlossenen Silanisierung des Füllstoffs leicht von diesem abgetrennt werden und besitzen speziell im Fall von Kohlendioxid zudem kaum umweltgefährliches Potential, da sie im natürlichen Kohlenstoffkreislauf aufgehen oder leicht recycliert werden können.

Das verdichtete Gas kann in einem luftdicht abgeschlossenen Raum oder Behälter unter Druck gesetzt werden, in der sich das zu behandelnde Material befindet. Während dieses Prozesses kann der Druck, im allgemeinen ausgehend von Atmosphärendruck, bis zum Arbeitsdruck des erfindungsgemäßen Verfahrens gesteigert werden.

Die verwendeten Silane können in dem verdichteten Gas ungelöst, teilweise oder auch vollständig gelöst vorliegen.

Der oxidische oder silikatische Füllstoff und das Silan können zuerst durchmischt beziehungsweise in Kontakt gebracht und dann mit dem im verdichteten Zustand vorliegenden Gas gemischt beziehungsweise in Kontakt gebracht werden.

Der oxidische oder silikatische Füllstoff kann erst mit dem im verdichteten Zustand vorliegenden Gas durchmischt beziehungsweise in Kontakt gebracht und dann mit dem Silan gemischt beziehungsweise in Kontakt gebracht werden.

Das Silan kann erst mit dem im verdichteten Zustand vorliegenden Gas durchmischt beziehungsweise in Kontakt gebracht und dann mit dem entsprechenden oxidischen oder silikatischen Füllstoff gemischt beziehungsweise in Kontakt gebracht werden.

Unter "in Kontakt gebracht" kann verstanden werden, daß das genannte Material eingetaucht, benetzt oder bedeckt ist, gelöst oder ungelöst vorliegt, suspendiert beziehungsweise adsorbiert oder absorbiert vorliegt.

Das "in Kontakt bringen" kann beispielsweise in einem Behälter oder in einem hermetisch abgeschlossenen Raum erfolgen, in den der unmodifizierte Füllstoff, die Silankomponente und das potentiell in den verdichteten Zustand transformierbare Gas geeignet eingebracht wird.

Der Kontakt zwischen homogen vermischter Silan- und Füllstoffkomponente mit dem potentiell in den verdichteten Zustand transformierbaren Gas kann beispielsweise in einem Behälter oder in einem hermetisch abgeschlossenen Raum hergestellt werden, in den das Gemisch aus Füllstoff und Silan geeignet eingebracht werden kann. Unter "Kontakt herstellen" kann verstanden werden, daß das genannte Material in das Extraktionsmedium eingetaucht wird und von diesem benetzt und bedeckt wird, vorzugsweise, daß der oxidische oder silikatische Füllstoff vollständig eingetaucht ist, oder auch daß alle äußeren und inneren Oberflächen des oxidischen oder silikatischen Füllstoffs mit dem verdichteten Gas in Kontakt sind.

Bei dem erfindungsgemäßen Verfahren zur Extraktion von Stoffen von silanmodifizierten Füllstoffen kann der Druck, der auch Arbeitsdruck genannt wird, im allgemeinen zwischen 1 und 2000 bar, vorzugsweise zwischen 1 und 300 bar, besonders bevorzugt zwischen 1 und 200 bar, insbesondere bevorzugt zwischen 1 und 150 bar, sein.

Die Temperatur (Arbeitstemperatur), bei dem das Verfahren durchgeführt werden kann, liegt zwischen 0 und 300°C, vorzugsweise zwischen 0 und 200°C, besonders bevorzugt zwischen 0 und 130°C.

Die Extraktion kann man in einem typischen Druckbehälter für Hochtemperatur-/Hochdruckreaktionen beziehungsweise Hochdruckextraktionen durchführen.

Der Druck kann während der Extraktion auf unterschiedlichen Druckniveaus für Zeiträume von bis zu 720 min, vorzugsweise 1-360 min, besonders bevorzugt 1-180 min, konstant gehalten werden und der Füllstoff kann während dieser Zeit in das verdichtete Gas eintauchen und von diesem durchströmt oder durchflossen werden.

Dem oxidischen oder silikatischen Füllstoff und/oder dem Silan können vor der Extraktion mit verdichteten Gasen Additive zugesetzt werden.

Der silanmodifizierte, oxidischen oder silikatischen Füllstoff kann während der Extraktion mit verdichteten Gasen mit zusätzlichen Additiven in Kontakt gebracht werden.

Während der Extraktion des oxidischen oder silikatischen Füllstoffs mit verdichteten Gasen, kann man in den zugeführten oder abgeführten Strom an verdichteten Gas der den silanmodifizierten oxidischen oder silikatischen Füllstoff durchströmt, zusätzlich Additive einbringen.

Als Additive können Ammoniak, Schwefeldioxid, Wasser, kurzkettige oder langkettige Polyether oder Polyetheralkohole, beispielsweise Diethylenglycol, Triethylenglycol oder andere Polyethylenglycole oder auch Polyethylenglycolalkylether [HO-(CH₂-CH₂-O)_{x'}-Alkyl]; x'=1-15 mit Molgewichten > 100 g/mol, kurzkettige oder langkettige Amine mit Molgewichten > 50 g/mol, Emulsionsbildner oder auch kurzkettige oder langkettige Silikonöle, beispielsweise Silikonöle mit Molgewichten > 100 g/mol oder auch Wiederholeinheiten D>2, oder Mischungen der oben genannten Verbindungen eingesetzt werden. Der silanmodifizierte oxidische oder silikatische Füllstoff kann während der Extraktion mit weiteren Stoffen, zusätzlich zum verdichteten Gas oder verdichteten Gasgemischen, in Kontakt kommen.

Im Anschluß an die Extraktion kann der silanmodifizierte, oxidische oder silikatische Füllstoff eine Evakuierungs- oder Druckentspannungsstufe mit Abtrennung des verdichteten Gases und der zugesetzten Additive oder eines Teils der zugesetzten Additive vom Endprodukt durchlaufen.

Die Evakuierungs- oder Druckentspannungsstufe kann in einer Zeit von bis zu 180 min, vorzugsweise zwischen 1 min und 120 min, besonders bevorzugt zwischen 1 min und 60 min, durchgeführt werden.

Die Evakuierungs- oder Druckentspannungsstufe kann bei Temperaturen zwischen -50°C und 300°C, vorzugsweise zwischen 1 und 200°C, besonders bevorzugt zwischen 1 und 150°C, und ganz besonders bevorzugt bei Temperaturen zwischen 1 und 130°C, durchgeführt werden.

Der mit verdichteten Gasen behandelte, silanmodifizierte oxidische oder silikatische Füllstoff kann einem zusätzlichen Kompaktierungs- oder Bearbeitungsschritt unterzogen werden.

Der mit verdichteten Gasen behandelte, silanmodifizierte oxidische oder silikatische Füllstoff kann in Farben, Lacken, Druckfarben, Beschichtungen, Coatings, Kleb- und Schmierstoffen, Kosmetika, Zahnpasten, Bauhilfsmitteln oder als Füllstoff in vulkanisierbaren Kautschuken beziehungsweise Silikonen oder in Kunststoffen verwendet werden.

Die mit dem erfindungsgemäßen Verfahren hergestellten, silanmodifizierten oxidischen oder silikatischen Füllstoffe weisen gegenüber bekannten silanmodifizierten Füllstoffen, zum Beispiel von Bis (3-triethoxysilylpropyl)tetrasulfan auf Kieselsäure (VP Coupsil 8108 von Degussa), den Vorteil einer höheren Lagerstabilität und damit höheren Leistungsstabilität auf. Zudem weisen die Füllstoffe hergestellt mit dem erfindungsgemäßen Verfahren einen im Vergleich geringeren Gehalt an potentiell freisetzbarem Alkohol, im allgemeinen Ethanol, auf. Bei Lagerung werden weniger flüchtige organische Bestandteile (VOC) freigesetzt.

### Beispiele

### 1. Vergleichsbeispiele 1-9 (Versuche ohne CO₂-Rückführung):

Die nachfolgend aufgeführten Vergleichsbeispiele in den Tabellen 1-2 werden in einer Hochdruck-Extraktionsanlage für Feststoffe mit einem Autoklavenvolumen von 50 1 durchgeführt.

Jeweils 8 kg gefällte Kieselsäure Ultrasil 7005 (Degussa AG; Analytische Kenngrößen: BET = 185 m²/g gemäß ISO 5794/AnnexD, CTAB-Oberfläche = 173 m²/g, Trocknungsverlust = 5,5 Gew.-% (DIN IS0787-2), werden in einem Rubergmischer mit 580 g Si 266 (Degussa AG; Bis-[triethoxysilylpropyl]disulfan, mit einer mittleren Kettenlänge von 2,25) physikalisch vermischt.

Die physikalisch vorbehandelte Kieselsäure wird in einen Einsatzbehälter (Volumen 35 1), der mit Sinterplatten oben und unten verschlossen wird, eingefüllt. Der vollständig gefüllte Einsatzbehälter wird in den Autoklaven einer Hochdruckextraktionsanlage eingesetzt (Festbett). Der Autoklav wird mit Hilfe einer Hochdruck-Membranpumpe auf Druck gebracht und gemäß den in den Tabellen 1-2 aufgeführten Drücken, Temperaturen und Zeiten mit Kohlendioxid, das von einer Hochdruckpumpe gefördert wird, durchströmt. Es wird versucht, Druckschwankungen zu vermeiden. Es wird die in den Tabellen 1-2 angegebene Wassermenge in den CO₂-Strom vor Eintritt in den Autoklaven dosiert.

Nach dem Durchströmen des Autoklaven der Hochdruckextraktionsanlage, wird das ethanolbeladene Kohlendioxid einem Abscheider zugeführt, in dem es unter Druckabsenkung (und Temperaturabsenkung) in den gasförmigen Zustand überführt wird, wobei die Löslichkeit der Inhaltsstoffe des Fluids (Wasser, Ethanol) abnimmt und diese dadurch weitgehend abgeschieden werden.

Nach dem Abscheider wird das gasförmige Kohlendioxid über einen Kühler kondensiert und einem Druckbehälter zugeführt, in dem es verbleibt. Es wird kein Kreislaufbetrieb realisiert, sondern immer sauberes, ethanolfreies CO₂ aus einem separaten Vorratstank durch die oben erwähnte Hochdruckmembranpumpe gefördert, verdichtet und für die Extraktion der silanmodifizierten Kieselsäure verwendet.

**Tabelle 1:**

| | Parameter | | | | | | Probe | Wasser (Karl-Fischer-Titration) | EtOH Gesamtmenge EtOH |
|---|---|---|---|---|---|---|---|---|---|
| | Si 266 [phf] | Druck [bar] | Zeit [min] | CO₂-Menge [kg] | Mindesttemperatur am CO₂-Eintritt in Autoklaven [°C] | | | in Gew.% | in Gew.% |
| **Vergleichsbeispiel 1** | | 70 | 30 | | | | | | |
| | 7,25 | 80 | 30 | 200 | 100 | 0,7% H₂O | Mischprobe | 10,5 | 1,1 |
| | | 100 | 60 | | | eingespeist | | | |
| | | 260 | 30 | | | in CO₂-Strom | | | |
| **Vergleichsbeispiel 2** | | | | | | | | | |
| | 7,25 | 100 | 120 | 200 | 100 | 0,7% H₂O | Mischprobe | 10,8 | 1,2 |
| | | 260 | 30 | | | eingespeist | | | |
| | | | | | | in CO₂-Strom | | | |
| **Vergleichsbeispiel 3** | | | | | | | | | |
| | 7,25 | 100 | 150 | 200 | 100 | 0,7% H₂O | Mischprobe | 9,7 | 1,3 |
| | | | | | | eingespeist | | | |
| | | | | | | in CO₂-Strom | | | |
| **Vergleichsbeispiel 4** | | | | | | | | | |
| | 9,06 | 100 260 | 120 30 | 200 | 100 | 0,7% H₂O eingespeist | Mischprobe | 8,4 | 1,5 |
| | | | | | | in CO₂-Strom | | | |
| **Vergleichsbeispiel 5** | | | | | | | | | |
| | 11,8 | 100 | 150 | 240 | 100 | 0,7% H₂O | Mischprobe | 9,3 | 1,6 |
| | | 260 | 30 | | | eingespeist | | | |
| | | | | | | in CO₂-Strom | | | |
| **Vergleichsbeispiel 6** | | | | | | | | | |
| | 9,06 | 100 | 210 | 240 | 100 | 0,7% H₂O | Mischprobe | 11,5 | 0,9 |
| | | 260 | 30 | | | eingespeist | | | |
| | | | | | | in CO₂-Strom | | | |
| | | | | | | | | | |
| **Vergleichsbeispiel 7** | 11,8 | 100 | 240 | 280 | 100 | 0,7% H₂O | Mischprobe | 12,2 | 1,4 |
| | | 260 | 30 | | | eingespeist | | | |
| | | | | | | in CO₂-Strom | | | |

**Tabelle 2:**

| | Parameter | | | | | | Probe | Wasser (Karl-Fischer-Titration) | EtOH (Gesamtmenge EtOH) |
|---|---|---|---|---|---|---|---|---|---|
| | Si 266 [phf] | Druck [bar] | Zeit [min] | CO₂- Menge [kg] | Mindesttemperatur am CO₂-Eintritt in Autoklaven [°C] | | | in Gew.% | in Gew.% |
| **Vergleichsbeispiel 8** | | | | | | | | | |
| | 7,25 | 90 | 120 | 200 | 100 | 0,7% H₂O | Mischprobe | 10,1 | 1,1 |
| | | 260 | 30 | | | eingespeist | | | |
| | | | | | | in CO₂-Strom | | | |
| **Vergleichsbeispiel 9** | | | | | | | | | |
| | 11,8 | 90 | 240 | 360 | 100 | 0,7% H₂O | Mischprobe | 13,0 | 1,6 |
| | | 260 | 30 | | | eingespeist | | | |
| | | | | | | in CO₂-Strom | | | |

### 2. Vergleichsbeispiele 10-11 (gemäß EP 1256604 A2; Beispiel A und B):

### Vergleichsbeispiel 10 (Beispiel A gemäß EP 1256604 A2) :

1500 g Ultrasil VN3 werden in einem Trommelmischer (4 Einbauten mit einer Höhe von 7 cm) eingefüllt. Die Trommel wird auf einem Rollstand bei einer Schräglage von 18° mit 20 Upm gedreht. Innerhalb von 55 min werden 120 g Si 69 (8 phf) mittels einer handelsüblichen Handsprühpumpe durch ein 6 cm-Loch im Trommeldeckel eingesprüht. Anschließend wird eine Nachlaufzeit der Trommel von 5 min eingehalten.

130 g der mit Si 69 vorbelegten Kieselsäure werden anschließend in den 600 ml-Einsatzbehälter eines Hochdruckextraktionsautoklaven, der auf 70°C vorgewärmt ist, gefüllt. Der Druck wird durch das Zupumpen von CO₂ langsam auf 150 bar erhöht. Nach 15 min Stehen wird die Temperatur durch die Mantelheizung des Autoklaven auf 100°C erhöht. Bei 100°C und 200 bar wird das System für eine Stunde konstant gehalten. Dann wird der Druck langsam auf 80 bar gesenkt. Bei 80 bar und 100°C wird für 25 min mit 1,2 kg CO₂ extrahiert. Abschließend wird bei 300 bar und 80°C mit 0,5 kg CO₂ für 30 min extrahiert. Anschließend wird das System entspannt und der modifizierte Füllstoff entnommen.

### Vergleichsbeispiel 11 (Beispiel B gemäß EP 1256604 A2):

2000 g Ultrasil VN3 werden 2h in einem Umluftschrank bei 105°C getrocknet. 1500 g des getrockneten Ultrasil VN3 werden in einem Trommelmischer (4 Einbauten mit einer Höhe von 7 cm) eingefüllt. Die Trommel wird auf einem Rollstand bei einer Schräglage von 18° mit 20 Upm gedreht. Innerhalb von 55 min werden 120 g Si 69 (8 phf) mittels einer handelsüblichen Handsprühpumpe durch ein 6 cm-Loch im Trommeldeckel eingesprüht. Anschließend wird eine Nachlaufzeit der Trommel von 5 min eingehalten.

130 g der mit Si 69 vorbelegten Kieselsäure werden anschließend in den 600 ml-Einsatzbehälter eines Hochdruckextraktionsautoklaven, der auf 70°C vorgewärmt ist, gefüllt. Der Druck wird durch das Zupumpen von CO₂ langsam auf 150 bar erhöht. Nach 15 min Stehen wird die Temperatur durch die Mantelheizung des Autoklaven auf 100°C erhöht. Bei 100°C und 200 bar wird das System für eine Stunde konstant gehalten. Dann wird der Druck langsam auf 80 bar gesenkt. Bei 80 bar und 100°C wird für 25 min mit 1,2 kg CO₂ extrahiert. Abschließend wird bei 300 bar und 80°C mit 0,5 kg CO₂ für 30 min extrahiert. Anschließend wird das System entspannt und der modifizierte Füllstoff entnommen. Die Analysenergebnisse sind in Tabelle 3 dargestellt.

**Tabelle 3: Analysenergebnisse der Vergleichsbeispiele 10 und 11**

| | **Einheit** | Vergleichsbeispiel 10 | Vergleichsbeispiel 11 |
|---|---|---|---|
| **Ethanolgehalt** | Gew.% | 1,8 | 3,0 |
| **Ethanolgehalt** | µmol/g Produkt | 388 | 649 |

### 3. Vergleichsbeispiele 12-17 (gemäß EP 1357156 A2; Beispiel 16-21):

### Vergleichsbeispiele aus EP 1357156 A2:

Die nachfolgend aufgeführten Versuche werden in einer Hochdruck-Extraktionsanlage für Feststoffe mit einem Autoklavenvolumen von 50 1 durchgeführt.

Jeweils 8 kg gefällte Kieselsäure Ultrasil 7005 (Degussa AG; Analytische Kenngrößen: BET = 185 m²/g gemäß ISO 5794/AnnexD, CTAB-Oberfläche = 173 m²/g, Trocknungsverlust = 5,5 Gew.-% (DIN IS0787-2), werden in einem Rubergmischer mit 640 g Si69 (Degussa AG; Bis-(triethoxysilylpropyltetrasulfan)) physikalisch vorbelegt und vermischt. Anschließend werden in einigen Versuchen zusätzliche Mengen Wasser auf das Gemisch von Kieselsäure und Silan aufgesprüht (Vergleichsbespiele 13+14 und 16+17).

Die physikalisch, mit Si69, vorbelegte Kieselsäure wird in einen Einsatzbehälter (Volumen 35 1), der mit Sinterplatten oben und unten verschlossen wird, eingefüllt. Der vollständig gefüllte Einsatzbehälter wird in den Autoklaven einer Hochdruckextraktionsanlage eingesetzt (Festbett). Der Autoklav wird mit Hilfe einer Hochdruck-Membranpumpe auf Druck gebracht und gemäß den in den Tabellen 4+5 aufgeführten Drücken und Temperaturen in festgelegten Zeiten mit definierten Mengen Kohlendioxid, die von einer Hochdruckpumpe gefördert werden, durchströmt. Unter Primärreaktion versteht man die chemische und / oder physikalische Immobilisierung des Silans auf dem Füllstoff. Unter der Extraktion versteht man die teilweise /vollständige Hydrolyse des Silans und Entfernung des Alkohols. In den aufgeführten Beispielen werden 0,2 Gew.% Wasser (bezogen auf die Masse an verwendeten CO₂) in den CO₂-Strom vor Eintritt in den Autoklaven dosiert. Das beladene Kohlendioxid wird nach dem Festbettextraktor einem Abscheider zugeführt, in dem es unter Druckabsenkung und/oder Temperaturerhöhung in den gasförmigen Zustand überführt wird, wobei die Löslichkeit für die Inhaltsstoffe des Fluids (zum Beispiel extrahiertes Ethanol) herabgesetzt und diese dadurch weitgehend abgeschieden werden. Nach dem Abscheider wird das gasförmige Kohlendioxid über einen Kühler kondensiert und einem Pufferbehälter zugeführt, von dem ausgehend es wieder von der Hochdruckpumpe angesaugt und zur Extraktion eingesetzt werden kann (Kreisprozess).

**Tabelle 4:**

| Vergleichs beispiel Nr. | Kieselsäure | Silanbelegung in phf (Si69) | Wasserzusatz in phf | Wasserzudosierung in sc-CO₂ | Druck in bar | Temperatur in °C | Zeit in min | Kohlendioxiddurchsatz in kg |
|---|---|---|---|---|---|---|---|---|
| **12** | Ultrasil 7005 | 8 | 0 | | 100 | durchschnitt lich 70 | 10 | |
| Extraktion | Ultrasil 7005 | | | + 0,2% H₂O bez. auf CO₂ | 100 | 80-87 | 60 | 160 kg |
| **13** | Ultrasil 7005 | 8 | 5 | | 100 | durchschnitt lich 70 | 10 | |
| Extraktion | Ultrasil 7005 | | | + 0,2% H₂O bez. auf CO₂ | 100 | 80-87 | 60 | 160 kg |
| **14** | Ultrasil 7005 | 8 | 8 | | 100 | durchschnitt lich 70 | 10 | |
| Extraktion | Ultrasil 7005 | | | + 0,2% H₂O bez. auf CO₂ | 100 | 77-88 | 80 min | 160 kg |

**Tabelle 5:**

| | Kieselsäure | Silanbelegung in phf (Si69) | Wasserzusatz in phf | Wasserzudosierung in sc-CO₂ | Druck in bar | Temperatur in °C | Zeit in min | Kohlen dioxid durchsatz in kg |
|---|---|---|---|---|---|---|---|---|
| **15** | Ultrasil 7005 | 8 | 0 | + 0,2% H₂O bez. auf CO₂ | 8 Druckpulsation en zwischen 60 und 100 bar | durchschnittlich 70 | 150 | |
| Extraktion | Ultrasil 7005 | | | + 0,2% H₂O bez. auf CO₂ | 100 | 85 | 60 | 160 kg |
| **16** | Ultrasil 7005 | 8 | 5 | + 0,2% H₂O bez. auf CO₂ | 8 Druckpulsation en zwischen 60 und 100 bar | durchschnittlich 70 | 150 | |
| Extraktion | Ultrasil 7005 | | | + 0,2% H₂O bez. auf CO₂ | 100 | 85 | 60 | 160 kg |
| **17** | Ultrasil 7005 | 8 | 8 | + 0,2% H₂O bez. auf CO₂ | 8 Druckpulsation en zwischen 60 und 100 bar | durchschnittlich 70 | 150 | |
| Extraktion | Ultrasil 7005 | | | + 0,2% H₂O bez. auf CO₂ | 100 | 85 | 60 | 160 kg |

In Tabelle 6 sind die analytischen Ergebnisse der Vergleichsbeispiele 12-17 zusammengefaßt.

**Tabelle 6: Analytische Werte der Vergleichsbeispiele 12-17**

| **Beispeil Nr.** | **durchschnittlicher Ethanolgehalt** | **durchschnittlicher Ethanolgehalt** | **Wassergehalt** |
|---|---|---|---|
| | **µmol/g** | **Gew.%** | **in Gew.%** |
| **12** | 609 | 2,8 | 3,79 |
| **13** | 540 | 2,5 | 4,15 |
| **14** | 444 | 2 | 5,07 |
| **15** | 502 | 2,3 | 4,09 |
| **16** | 472 | 2,2 | 4,28 |
| **17** | 499 | 2,3 | 4,95 |

### Beispiele 1-17:

Die nachfolgend aufgeführten, erfindungsgemäßen Beispiele (Tabellen 7-8) werden in einer Hochdruck-Extraktionsanlage für Feststoffe mit einem Autoklavenvolumen von 50 1 durchgeführt.

Jeweils 8 kg gefällte Kieselsäure Ultrasil 7005 (Degussa AG; Analytische Kenngrößen: BET = 185 m²/g gemäß ISO 5794/AnnexD, CTAB-Oberfläche = 173 m²/g, Trocknungsverlust = 5,5 Gew.-% (DIN IS0787-2), werden in einem Rubergmischer mit 580 g Si 266 (Degussa AG; Bis-[triethoxysilylpropyl]disulfan), mit einer mittleren Kettenlänge von 2,25) physikalisch vermischt.

Die physikalisch vorbehandelte Kieselsäure wird in einen Einsatzbehälter (Volumen 35 1), der mit Sinterplatten oben und unten verschlossen wird, eingefüllt. Der vollständig gefüllte Einsatzbehälter wird in den Autoklaven einer Hochdruckextraktionsanlage eingesetzt (Festbett). Der Autoklav wird mit Hilfe einer Hochdruckmembranpumpe auf Druck gebracht und gemäß den in den Tabellen 7-8 aufgeführten Drücken, Temperaturen und Zeiten mit den angegebenen Mengen Kohlendioxid, die von einer Hochdruckpumpe gefördert werden, durchströmt. Es wird dabei versucht, Druckschwankungen zu vermeiden. Es wird die in den Tabellen 7-8 angegebene Wassermenge in den CO₂-Strom vor Eintritt in den Autoklaven dosiert.

Das beladene Kohlendioxid wird nach dem Festbettextraktor einem Hochdruckwäscher zugeführt, in dem es mit den in den Tabellen 7-8 beschriebenen Mengen, Wasser (Absorbens) in Kontakt kommt. Der Hochdruckwäscher besteht aus einem Druckbehälter, der mit Füllkörpern modifiziert ist. Dem Hochdruckwäscher wird frisches Wasser von oben zugeführt, während das Kohlendioxid von unten in den Wäscher eintritt. Ethanolbelastetes Wasser wird dem Hochdruckwäscher unten entnommen. Das Wasser (Absorbens) kann kontinuierlich oder diskontinuierlich in den Wäscher gefüllt beziehungsweise diesem entnommen werden.

Nach dem Hochdruckwäscher wird das Kohlendioxid einem Abscheider zugeführt, in dem es unter Druckabsenkung in den gasförmigen Zustand überführt wird, wobei die Löslichkeit für die Inhaltsstoffe des Fluids herabgesetzt und diese dadurch weitgehend abgeschieden werden.

Nach dem Abscheider wird das gasförmige Kohlendioxid über einen Kühler kondensiert und einem Pufferbehälter zugeführt, von dem ausgehend es wieder von der Hochdruckpumpe angesaugt und zur Extraktion eingesetzt wird (Kreisprozess).

**Tabelle 7:**

| **Beispiel Nr.** | **Parameter** | | | | | | | | **Probennahmen Oben, Mitte und Unten im Autoklav zu gleichen Volumina; Durchmischung und Analyse** | **Wasser (Karl-Fischer Titration)** | **EtOH (Restmenge)** |
|---|---|---|---|---|---|---|---|---|---|---|---|
| | **Si 266** | **CO₂ Druck** | **Temperatur** | | **H₂O Einspeisung** | | **Zelt** | **CO₂-Durchsatz (Autoklav)** | | | |
| | | | **Autoklav** | **Wäscher** | **in CO₂ vor Autoklav** | **In den Wäscher** | | | | | |
| | **phf** | **bar** | in °C | **in °C** | **Gew.% bzgl. CO₂-Durchsatz** | **Liter / h** | **min** | **kg** | | **in Gew.%** | **in Gew.%** |
| **1** | 7,25 | 90-100 | 90 | 50-73 | 0,4 | 20 | 120 | 100 | Mischprobe | 5,6 | 1,8 |
| **2** | 7,25 | 91-99 | 72-99 | 42-65 | 0,55 | 35 | 180 | 155 | Mischprobe | 9,1 | 1,5 |
| **3** | 7,25 | 91-99 | 72-98 | 42-53 | 0,5 | 35 | 120 | 102 | Mischprobe | 7,5 | 1,6 |
| **4** | 7,25 | 91-99 | 74-98 | 44-52 | 0,5 | 50 | 120 | 100 | Mischprobe | 7,5 | 1,7 |
| **5** | 7,25 | 91-99 | 80-113 | 50-71 | 0,5 | 20 | 120 | 165 | Mischprobe | 7,3 | 1,5 |
| **6** | 7,25 | 91-99 | 70-106 | 40-63 | 0,5 | 50 | 120 | 160 | Mischprobe | 7,5 | 1,4 |
| **7** | 7,25 | 90-99 | 73-105 | 44-65 | 0,5 | 35 | 120 | 170 | Mischprobe | 7,3 | 1,6 |
| 8 | 7,25 | 89-102 | 85-88 | 32-50 | 0,5 | 80 | 120 | 170 | Mischprobe | 6,8 | 1,6 |

**Tabelle 8:**

| **Beispiel Nr.** | **Parameter** | | | | | | | | **Probennahmen Oben, Mitte und Unten im Autoklav zu gleichen Volumina; Durchmischung und Analyse** | **Wasser (Karl-Fischer Titration)** | **EtOH (Restmenge)** |
|---|---|---|---|---|---|---|---|---|---|---|---|
| | **Si 266** | **Druck CO₂** | **Temperatur** | | **H₂O Einspeisung** | | **Zeit** | **CO₂ - Durchsatz (Autoklav)** | | | |
| | | | **Autoklav** | **Wäscher** | **in CO₂ vor Autoklav** | **In den Wäscher** | | | | | |
| | **phf** | **bar** | **in °C** | **in °C** | **Gew.% bzgl. CO₂- Durchsatz** | **Liter/h** | **min** | **kg** | | **in Gew.%** | **in Gew.%** |
| 9 | 7,25 | 90-101 | 75-100 | 35-50 | 0,5 | 80 | 120 | 210 | Mischprobe | 7,15 | 1,3 |
| **10** | 7,25 | 91-102 | 56-90 | 39-50 | 0,5 | 60 | 120 | 210 | Mischprobe | 6,8 | 1,4 |
| **11** | 7,25 | 91-100 | 60-84 | 38-62 | 0,5 | 60 | 120 | 165 | Mischprobe | 6,7 | 1,4 |
| **12** | 7,25 | 90-100 | 57-81 | 37-66 | 0,75 | 60 | 120 | 165 | Mischprobe | 9,4 | 1,8 |
| **13** | 7,25 | 90-100 | 55-83 | 39-52 | 0,75 0 | 60 | 90 30 | 210 | Mischprobe | 9,0 | 1,4 |
| **14** | 7,25 | 92-102 | 61-90 | 37-47 | 0,75 0 | 80 | 90 30 | 200 | Mischprobe | 8,6 | 1,3 |
| **15** | 7,25 | 93-100 | 55-81 | 37-55 | 0,75 0 | 80 | 90 30 | 160 | Mischprobe | 7,9 | 1,4 |
| **16** | 7,25 | 90-100 | 60-87 | 37-66 | 0,5 | 80 | 120 | 200 | Mischprobe | 6,7 | 1,4 |
| **17** | 7,25 | 90-102 | 60-93 | 42-63 | 0,5 | 80 | 180 | 300 | Mischprobe | 7,2 | 1,0 |

## Patentansprüche

1. Verfahren zur Extraktion von Stoffen von mindestens einem silanmodifizierten oxidischen oder silikatischen Füllstoff, wobei man
- als Extraktionsmittel mindestens ein mittels Druck und / oder Temperatur verdichtetes Gas einsetzt und
- das verdichtete Gas im Druckbehälter in radialer Richtung von außen nach innen durch den Füllstoff führt und
- die vom silanmodifizierten Füllstoff extrahierten Stoffe mit einem geeigneten Sorbens aus dem verdichteten Gas entfernt, wobei als geeignetes Sorbens wasser eingesetzt wird.

2. Verfahren zur Extraktion von Stoffen von mindestens einem silanmodifizierten oxidischen oder silikatischen Füllstoff nach Anspruch 1, **dadurch gekennzeichnet, daß** man als verdichtetes Gas Kohlendioxid, Helium, Stickstoff, Distickstoffmonoxid, Schwefelhexafluorid, gasförmige Alkane mit 1 bis 5 C-Atomen, gasförmige Alkene mit 2 bis 4 C-Atomen, gasförmige Alkine, gasförmige Diene, gasförmige Fluorkohlenwasserstoffe, Chlor und/oder Fluorchlorkohlenwasserstoffe oder deren Ersatzstoffe oder Ammoniak, sowie Gemische der genannten Gase einsetzt.

3. Verfahren zur Extraktion von Stoffen von mindestens einem silanmodifizierten oxidischen oder silikatischen Füllstoff nach Anspruch 1, **dadurch gekennzeichnet, daß** der Druck zwischen 1 und 300 bar beträgt.

4. Verfahren zur Extraktion von Stoffen von mindestens einem silanmodifizierten oxidischen oder silikatischen Füllstoff nach Anspruch 1, **dadurch gekennzeichnet, daß** die Extraktion bei einer Temperatur zwischen 0 und 200°C erfolgt.

5. Verfahren zur Extraktion von Stoffen von mindestens einem silanmodifizierten oxidischen oder silikatischen Füllstoff nach Anspruch 1, **dadurch gekennzeichnet, daß** man den Druck während der Extraktion auf unterschiedlichen Druckniveaus für Zeiträume von bis zu 720 min konstant hält und der Füllstoff während dieser Zeit in das verdichtete Gas eintaucht und von diesem durchströmt wird.

6. Verfahren zur Extraktion von Stoffen von mindestens einem silanmodifizierten oxidischen oder silikatischen Füllstoff nach Anspruch 1, **dadurch gekennzeichnet, daß** die Extraktion von Stoffen unter gleichmäßigen Bedingungen durchgeführt wird.

7. Verfahren zur Extraktion von Stoffen von mindestens einem silanmodifizierten oxidischen oder silikatischen Füllstoff nach Anspruch 1, **dadurch gekennzeichnet, daß** man den silanmodifizierten oxidischen oder silikatischen Füllstoff während der Umsetzung im verdichteten Gas mit zusätzlichen Additiven in Kontakt bringt.

8. Verfahren zur Extraktion von Stoffen von mindestens einem silanmodifizierten oxidischen oder silikatischen Füllstoff nach Anspruch 7, **dadurch gekennzeichnet, daß** man als Additive Ammoniak, Wasser, Schwefeldioxid, kurzkettige oder langkettige Polyether beziehungsweise kurzkettige oder langkettige Amine, Emulsionsbildner oder auch kurzkettige oder langkettige Silikonöle einsetzt.

## Claims

1. Process for extracting substances from at least one silane-modified oxidic or silicatic filler, by
- using, as the extractant, at least one gas compressed by means of pressure and/or temperature and
- conducting the compressed gas through the filler in the radial direction from the outside inward in the pressure vessel and
- removing the substances extracted from the silane-modified filler from the compressed gas with a suitable sorbent, using water as the suitable sorbent.

2. Process for extracting substances from at least one silane-modified oxidic or silicatic filler according to Claim 1, **characterized in that** the compressed gas used is carbon dioxide, helium, nitrogen, dinitrogen monoxide, sulphur hexafluoride, gaseous alkanes having 1 to 5 carbon atoms, gaseous alkenes having 2 to 4 carbon atoms, gaseous alkynes, gaseous dienes, gaseous fluorohydrocarbons, chlorine and/or fluorochlorohydrocarbons or substitutes therefor, or ammonia, or else mixtures of the gases mentioned.

3. Process for extracting substances from at least one silane-modified oxidic or silicatic filler according to Claim 1, **characterized in that** the pressure is between 1 and 300 bar.

4. Process for extracting substances from at least one silane-modified oxidic or silicatic filler according to Claim 1, **characterized in that** the extraction is effected at a temperature between 0 and 200°C.

5. Process for extracting substances from at least one silane-modified oxidic or silicatic filler according to Claim 1, **characterized in that** the pressure is kept constant during the extraction at different pressure levels for periods of up to 720 min, during which time the filler is immersed into the compressed gas which flows through it.

6. Process for extracting substances from at least one silane-modified oxidic or silicatic filler according to Claim 1, **characterized in that** the extraction of substances is performed under homogeneous conditions.

7. Process for extracting substances from at least one silane-modified oxidic or silicatic filler according to Claim 1, **characterized in that** the silane-modified oxidic or silicatic filler is contacted with additional additives during the reaction in the compressed gas.

8. Process for extracting substances from at least one silane-modified oxidic or silicatic filler according to Claim 7, **characterized in that** the additives used are ammonia, water, sulphur dioxide, short-chain or long-chain polyethers or short-chain or long-chain amines, emulsion formers, or else short-chain or long-chain silicone oils.

## Revendications

1. Procédé pour l'extraction de substances d'au moins une charge de type oxyde ou silicate modifiée par un silane, dans lequel
- on utilise comme agent d'extraction au moins un gaz comprimé par pression et/ou température et
- on fait passer le gaz comprimé à travers la charge en direction radiale, de l'extérieur vers l'intérieur, dans le récipient tenant la pression et
- on élimine du gaz comprimé, à l'aide d'un agent de sorption approprié, les substances extraites de la charge modifiée par un silane, en utilisant l'eau comme agent de sorption approprié.

2. Procédé pour l'extraction de substances d'au moins une charge de type oxyde ou silicate modifiée par un silane, selon la revendication 1, **caractérisé en ce qu'**on utilise comme gaz comprimé le dioxyde de carbone, l'hélium, l'azote, le protoxyde d'azote, l'hexafluorure de soufre, des alcanes gazeux ayant de 1 à 5 atomes de carbone, des alcènes gazeux ayant de 2 à 4 atomes de carbone, des alcynes gazeux, des diènes gazeux, des hydrocarbures fluorés gazeux, le chlore et/ou des fluorochlorocarbures ou leurs produits de remplacement ou l'ammoniac, ainsi que des mélanges des gaz nommés.

3. Procédé pour l'extraction de substances d'au moins une charge de type oxyde ou silicate modifiée par un silane, selon la revendication 1, **caractérisé en ce que** la pression est comprise entre 1 et 300 bars.

4. Procédé pour l'extraction de substances d'au moins une charge de type oxyde ou silicate modifiée par un silane, selon la revendication 1, **caractérisé en ce qu'**on effectue l'extraction à une température comprise entre 0 et 200 °C.

5. Procédé pour l'extraction de substances d'au moins une charge de type oxyde ou silicate modifiée par un silane, selon la revendication 1, **caractérisé en ce que** pendant l'extraction on maintient constante la pression à un niveau de pression différent pendant des périodes allant jusqu'à 720 minutes et pendant ce temps la charge est introduite dans le gaz comprimé et traversée par celui-ci.

6. Procédé pour l'extraction de substances d'au moins une charge de type oxyde ou silicate modifiée par un silane, selon la revendication 1, **caractérisé en ce que** l'extraction des substances est effectuée dans des conditions constantes.

7. Procédé pour l'extraction de substances d'au moins une charge de type oxyde ou silicate modifiée par un silane, selon la revendication 1, **caractérisé en ce que** dans le gaz comprimé la charge de type oxyde ou silicate modifiée par un silane est mise en contact avec des additifs supplémentaires.

8. Procédé pour l'extraction de substances d'au moins une charge de type oxyde ou silicate modifiée par un silane, selon la revendication 7, **caractérisé en ce qu'**on utilise comme additifs l'ammoniac, l'eau, l'anhydride sulfureux, des polyéthers à courte chaîne ou à longue chaîne ou des amines à courte chaîne ou à longue chaîne, des émulsifiants ou bien des huiles de silicone à courte chaîne ou à longue chaîne.
